(19) Europäisches Patentamt
European Patent Office
Office européen des brevets

(11) EP 4 459 707 A1

(12) EUROPEAN PATENT APPLICATION

(43) Date of publication:
**06.11.2024 Bulletin 2024/45**

(21) Application number: **23171356.1**

(22) Date of filing: **03.05.2023**

(51) International Patent Classification (IPC):
***H01M 4/24*** *(2006.01)* ***H01M 4/50*** *(2010.01)*
***H01M 4/62*** *(2006.01)* ***H01M 10/28*** *(2006.01)*
***H01M 50/414*** *(2021.01)* ***H01M 50/466*** *(2021.01)*
***H01M 50/46*** *(2021.01)* ***H01M 10/24*** *(2006.01)*

(52) Cooperative Patent Classification (CPC):
**H01M 10/24; H01M 4/24; H01M 4/244; H01M 4/50; H01M 4/62; H01M 10/28; H01M 50/414; H01M 50/46; H01M 50/466;** H01M 2300/0082

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Zentrum für Sonnenenergie- und Wasserstoff-Forschung Baden-Württemberg Gemeinnützige Stiftung
70563 Stuttgart (DE)**

(72) Inventors:
- **Marini, Emanuele
89081 Ulm (DE)**
- **Yazili, Didem
89081 Ulm (DE)**
- **Liebert, Michael
89231 Neu-Ulm (DE)**
- **Brimaud, Sylvain
89073 Ulm (DE)**

(74) Representative: **Ter Meer Steinmeister & Partner Patentanwälte mbB
Nymphenburger Straße 4
80335 München (DE)**

# (54) ELECTRODE FOR RECHARGEABLE ALKALINE BATTERY

(57) The present invention relates to an electrode for use in a rechargeable alkaline battery. The electrode comprises a current collector, an active material which is loaded on the current collector, and an anion-exchange membrane, wherein the active material comprises $MnO_2$ or Zn and the anion-exchange membrane comprises a crosslinked benzimidazole polymer. The present invention further relates to a rechargeable alkaline battery comprising the electrode as a positive electrode, when the active material comprises $MnO_2$, or as a negative electrode, when the active material comprises Zn.

**Figure 1**

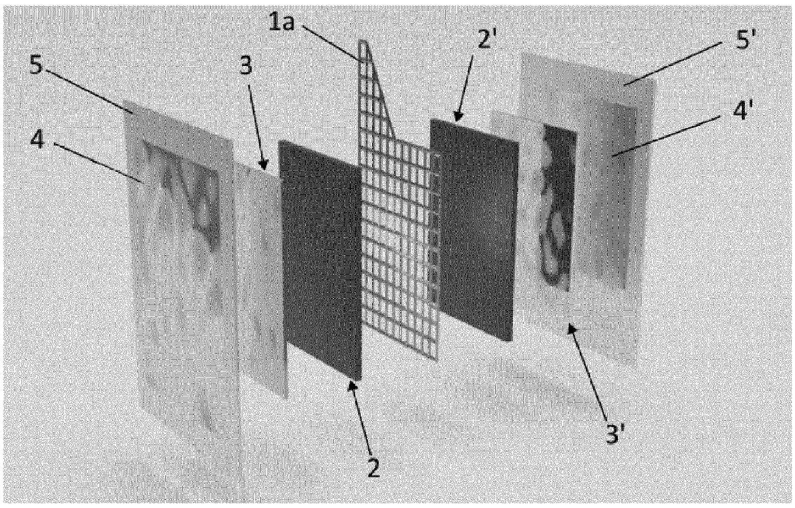


EP 4 459 707 A1

## Description

### Field of the invention

The present invention relates to an electrode for use in a rechargeable alkaline battery. The electrode comprises a current collector, an active material which is loaded on the current collector, and an anion-exchange membrane, wherein the active material comprises $MnO_2$ or Zn and the anion-exchange membrane comprises a crosslinked benzimidazole polymer. The present invention further relates to a rechargeable alkaline battery comprising the electrode as a positive electrode, namely when the active material comprises $MnO_2$, or as a negative electrode, namely when the active material comprises Zn.

### Technical background

Electrodes for electrochemical charge storage in setups with Zn-$MnO_2$ chemistry are limited to primary batteries. In other words, general purpose Zn-$MnO_2$ secondary batteries are currently not commercially available. One reason for this gap in the battery portfolio is that a reasonable degree of rechargeability could not yet be realized with the conventional electrode designs.

In fact, it has been observed that a depth-of-discharge (D.o.D.) level of more than 20% of the initial electron capacity results in an irreversible phase transformation of manganese dioxide in Zn-$MnO_2$ batteries. Responsible for this irreversible phase transformation is, presumably, the two-step reduction of $MnO_2$. In a first reduction step, as Mn is reduced from the +4 to the +3 oxidation state, manganese(III)oxyhydroxide, MnOOH, is formed. In a second reduction step, as Mn is reduced from the +3 to the +2 oxidation state, $Mn^{3+}$ ions from MnOOH dissolve into the electrolyte, are reduced and deposited back onto the electrode as manganese(II)hydroxide, $Mn(OH)_2$. However, this process simultaneously produces compounds such as hausmannite ($Mn_3O_4$) and hetaerolite ($ZnMn_2O_4$), which are electrochemically inactive and insulating, resulting in permanent loss of capacity and conductivity. Of the latter compounds, hetaerolite forms due to the presence of zincate ions, which are originally generated at the negative electrode but can pass almost unimpeded through known battery separator materials.

In order to improve rechargeability of Zn-MnOz batteries, different approaches have been suggested in the prior art.

A first approach was proposed by Kordesch and coworkers (Kordesch, K., Gsellmann, J., Peri, M., Tomantschger, K., Chemelli, R., Electrochim. Acta 26, 1495-1504, 1981). They found out that the morphology of the manganese dioxide, which is used for the production of the positive electrode, has an impact on the rechargeability and should, therefore, be carefully selected. Moreover, they recommended to limit the amount of zinc in the battery setup. Despite implementing these two measures, the D.o.D. levels achieved for 100-200 charging cycles only ranged from 15-25% of the initial electron capacity. This roughly corresponds to a D.o.D. of 10% of the battery's full capacity.

More recently, Ingale and coworkers (Ingale, N. D., Gallaway, J. W., Nyce, M., Couzis, A., Banerjee, S., J. Power Sources 276, 7-18, 2015) have shown a stable reversible capacity of an alkaline Zn-$MnO_2$ battery for 3000 and 500 cycles at D.o.D. levels of 10% to 20%, respectively.

Another approach to improve the reversibility of the batteries involved chemical or physical modification of the manganese dioxide electrode. For Bi-modified delta-$MnO_2$ (birnessite) and beta-$MnO_2$ (pyrolusite), a nearly full reversibility has been demonstrated by Wroblowa et al. (Wroblowa, H. S., Gupta, N., J. Electroanal. Chem. Interfacial Electrochem. 238, 1-2, 1987), yet in the absence of Zn species. Similarly, a full reversibility has been proved by Yadav and coworkers for $Cu^{2+}$ intercalated delta-$MnO_2$ combined with $Bi_2O_3$ in a zincate free alkaline electrolyte (Yadav, G. G., Gallaway, J. W., Turney, D. E., Nyce, M., Huang, J., Wei, X., Banerjee, S., Nat. Commun. 14424, 2017).

A further attempt to prevent irreversible structural changes in the manganese dioxide electrode and achieve rechargeability was based on the use of an additional layer arranged to block diffusion of zincates ions towards the $MnO_2$ electrode within the battery cell. Yadav and coworkers reported that up 900 charge/discharge load cycles with >80% retention of D.o.D. could be completed with a Zn-$MnO_2$ battery (Cu/Bi intercalated delta-$MnO_2$) when making use of a calcium hydroxide interlayer (Yadav, G. G., Wei, X., Huang, J., Gallaway, J. W., Turney, D. E., Nyce, M., Secor, J., Banerjee, S., J. Mater. Chem. A5, 15845-15854, 2017). Duay and coworkers (Duay, J., Kelly, M., Lambert, T. N., J. Power Sources 395, 430-438, 2018) have used ceramic $Na_3Zr_2Si_2PO_{12}$ separators as an additional layer and found that this increased the battery lifetime by 22% (at 5% D.o.D., C/5 rate). Moreover, membranes made of specialty polymers, such as N-butylimidazolium-functionalized polysulfone (NBI-PSU)-based separators, were used and were found to extend the life cycle of Zn-$MnO_2$ batteries to 80 charge/discharge load cycles at high D.o.D levels (Kolesnichenko, I. V., Arnot, D. J., Lim, M. B., Yadav, G. G., Nyce, M., Huang, J., Banerjee, S., Lambert, T. N., ACS Appl. Mater. Interfaces 12, 50406-50417, 2020). Last but not least, ion selective membranes based on graphene and its oxides (GO PVA-III) have recently been found to selectively block zincate ions, allowing the MnOz electrode to discharge for up to 150 charge/discharge load cycles (Huang, J., Yadav, G. G., Turney, D. E., Cho, J., Nyce, M., Wygant, B. R., Lambert, T. N.,

Banerjee, S., ACS Appl. Energy Mater. 5, 9952-9961, 2022).

Still, the approaches to promote rechargeability that are already known from the prior art are not satisfying for different reasons:

For most of the summarized approaches, the desired $MnO_2$ electrode reversibility is only possible at low D.o.D (or shallow discharge). This significantly decreases the battery cell's energy density.

Furthermore, the use of an additional layer arranged to block diffusion of zincates ions suffers from various drawbacks. The use of ceramic separators as additional layer, for example, causes a very high resistivity of the battery cell. In addition, the brittle nature of the ceramic material is a bar to the fabrication of flexible electrodes. Membranes made of specialty polymers are disadvantageous due to their limited availability. Also, such polymer membranes enable too little cycle life. In the case of a calcium hydroxide interlayer, the volumetric energy density of the Zn-$MnO_2$ cell suffers and resistivity is increased. Also zincate ions are trapped by the calcium hydroxide interlayer and cannot participate in the recharge of the Zn electrode anymore.

Therefore, the need for alkaline batteries with a high degree of rechargeability still remains.

Consequently, it has been an objective of the present invention to provide an electrode allowing alkaline batteries to be recharged in an almost unlimited way, *i.e.* to a comparable extent as, for example, lead-acid batteries, nickel metal hydride batteries or nickel-cadmium batteries.

## Summary of the invention

The above identified objective is accomplished by the provision of an electrode with the features of independent claim 1. Advantageous embodiments of the electrode may be derived from the dependent claims. Furthermore, a rechargeable alkaline battery with the features of claim 15 is provided.

The electrode according to the present invention comprises, in the sequence from the interior to the exterior, a current collector, an active material which is loaded on the current collector, and an anion-exchange membrane, wherein the active material comprises $MnO_2$ or Zn, and wherein the anion-exchange membrane (AEM) comprises a crosslinked benzimidazole polymer.

With this configuration, the electrode is suitable for use in a rechargeable alkaline battery, such as a rechargeable Zn-$MnO_2$ battery.

In particular, it has surprisingly been found that the AEM comprising crosslinked benzimidazole polymer is effective against those processes which result in irreversible phase transformations of the $MnO_2$ active material. Additionally, the AEM has proved to be long-lived in alkaline electrolytes. More specifically, the AEM comprising a crosslinked benzimidazole polymer enables efficient transport of hydroxide ions, *i.e.* $OH^-$, and blocks diffusion and/or transport of zincate ions, *i.e.* $Zn(OH)_4^{2-}$. Also, it has chemical and dimensional stability in alkaline electrolytes.

It is appreciated that the electrode according to the present invention may have a symmetrical setup with respect to the current collector. In a symmetrical setup, the active material is loaded on each of the two opposing sides of the current collector and an anion-exchange membrane is also arranged on each of the two opposing sides of the current collector.

### Underlying Mechanisms

The transport of hydroxide ions in an alkaline battery cell is believed, without wishing to be bound by theory, to proceed via three fundamental mechanisms, namely by diffusion, the Grotthuss mechanism, and surface site hopping. At least surface site hopping, which involves the movement of hydroxide ions by hopping along strongly interacting groups, is promoted by the presence of tertiary ammonium groups in the backbone of the crosslinked benzimidazole polymer.

The transport of zincate ions is, according to the current hypothesis, effectively hindered due to a steric size-exclusion principle. In this context, it is noted that zincate ions have a relatively large solvodynamic radius. In 4 M NaOH, for example, zincate ions have a solvodynamic radius of about 0.34 nm. The crosslinkages in the benzimidazole polymer, which can be either ionic or covalent, result in the formation of channels within the AEM. These channels are suitably sized and/or configured to block the passage of zincate ions. Moreover, it is assumed that $Zn^{2+}$ ions strengthen the benzimidazole polymer (PBI) network by coordination, creating continuous water channels and uncovering more polar groups. This process increases the membrane's inner water-accessible surface area, leading to the development of subnanometer-sized molecular channels that enable rapid charge carrier transport. Concurrently, the $Zn^{2+}$ ions are entrapped within the membrane through their coordination by the PBI network.

Additionally, the membrane may contain both positive charges, for example, from ternary ammonium groups, and negative charges, such as from sulfonic acid groups. These fixed charges establish an electrostatic environment within the polymer matrix, influencing the distribution of mobile ions (like hydroxide ions and zincate ions) in the surrounding media. Due to the presence of both positive and negative charges within the membrane, certain ions may be

selectively attracted or repelled by the fixed charges (Donnan's exclusion principle). In a strongly alkaline media as in an alkaline battery cell, the negative charges from the sulfonic acid groups may preferentially interact with the positively charged $Zn^{2+}$ ions, while the positive charges from the ternary ammonium groups may preferentially interact with the negatively charged hydroxide ions ($OH^-$).

Since the balance of factors governing selective ion transport within the AEM is intricate, the task of devising a membrane that can simultaneously exhibit complete blockage of zincate ions while maintaining optimal anionic conductivity has not yet been solved until now, and it required inventive skill to find a delicate equilibrium among all the phenomena described above.

Last but not least, it is believed that the stability of the AEM may be attributed to the presence of crosslinkages as well. Crosslinking contributes to an increased inertness and makes possible reaction sites less accessible.

Definitions

When the active material comprises $MnO_2$, the electrode may also be denoted a "manganese oxide based electrode" or a "positive electrode". Within the context of the present application, the term "manganese oxide" is to be understood as a generic term for $MnO_2$ in an arbitrary crystal structure. When the active material comprises Zn, the electrode may also be denoted a "zinc based electrode" or a "negative electrode".

The term "optionally substituted" is intended to expressly indicate that the specified group is unsubstituted or substituted by one or more suitable substituents.

The term "benzimidazole polymer" refers to a polymer comprising a benzimidazole unit. The benzimidazole polymer may be a homopolymer or a copolymer. Within the present invention the term "copolymer" refers to polymers prepared from at least two different monomers. In other words, the term "copolymer" also covers terpolymers and copolymers with four or more different monomeric units. Thus, a benzimidazole polymer may be a copolymer comprising a benzimidazole unit and at least one further monomeric unit different from a benzimidazole unit.

The term "crosslinked" is a term from polymer science. It describes a state in which covalent or ionic bonds are formed that join polymer chains together, resulting in an interconnected network (Clemens, A. L., Jayathilake, B. S., Karnes, J. J., Schwartz, J. J., Baker, S. E., Duoss, E. B., Oakdale, J. S., Tuning Alkaline Anion Exchange Membranes through Crosslinking: A Review of Synthetic Strategies and Property Relationships. Polymers. 2023; 15(6), 1534). In other words, the term "crosslinked" refers to a state in which there is a permanent interaction between different sites in a polymer, for example different sites in a benzimidazole copolymer. The sites, that are crosslinked, may be located on different polymer chains. Otherwise, the sites, that are crosslinked, may be separated by several repeating units, for example by at least five, preferably by at least 50 repeating units. Furthermore, a permanent interaction may be characterized in that it is stable under the conditions prevailing in an alkaline battery cell, for example in a Zn-$MnO_2$ battery cell. Likewise, the permanent interactions may be covalent and/or ionic bonds. The presence of crosslinking results in the creation of an interconnected network structure. In the context of the present invention, crosslinking mainly occurs during the casting process of the anion exchange membrane, due to the presence of various functional groups in the structure of the benzimidazole polymer that can facilitate ionic or covalent bonding within or between polymer chains.

Within the present invention, the term "membrane" or "anion exchange membrane" denotes a layer having a dimensional stability on its own, for example a layer having a thickness of 1.0 μm or more, such as from 1.0 to 100 μm. In contrast to that, a "coating layer" is a layer that does not have dimensional stability on its own and needs to be disposed on a substrate, for example a layer having a thickness of less than 1.0 μm, such as from 0.01 to less than 1.0 μm.

Benzimidazole Polymer

In a preferred embodiment, the crosslinked benzimidazole polymer comprises a repeating unit represented by the following Formula (I)

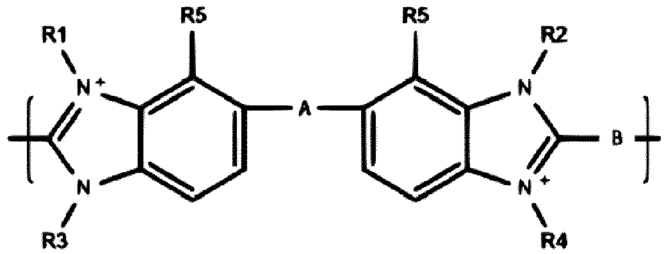

(I),

wherein A is a bond or oxygen, B is a bond, phenylene, 4,4'-diphenylene ether or sulfonated 4,4'-diphenylene ether, R1

to R4 are independently from each other selected from the group consisting of a lone electron pair, hydrogen, and $C_1$ to $C_6$ alkyl, and R5 is hydrogen or a sulfonic acid group, preferably hydrogen.

In a first preferred embodiment, the crosslinked benzimidazole polymer is a crosslinked benzimidazole polymer comprising a repeating unit represented by the following formula (Ia):

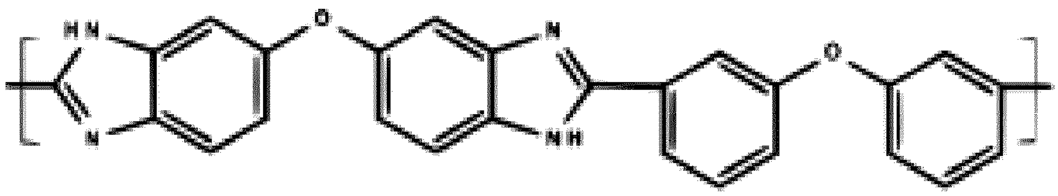

(Ia).

The systematic name of a benzimidazole polymer consisting of the repeating unit of Formula (Ia) is poly-(1-(4,4'-diphenylether)-5-oxybenzimidazole)-benzimidazole (hereinafter also "PBI-OO").

The crosslinked benzimidazole polymer may be obtained by (i) reacting 4,4'-oxydibenzene-1,2-diamine and 4,4'-oxybis(benzoic acid) according to reaction formula (R1) below to obtain the benzimidazole polymer consisting of the repeating unit of Formula (Ia) and (ii) subjecting the benzimidazole polymer to conditions for crosslinking:

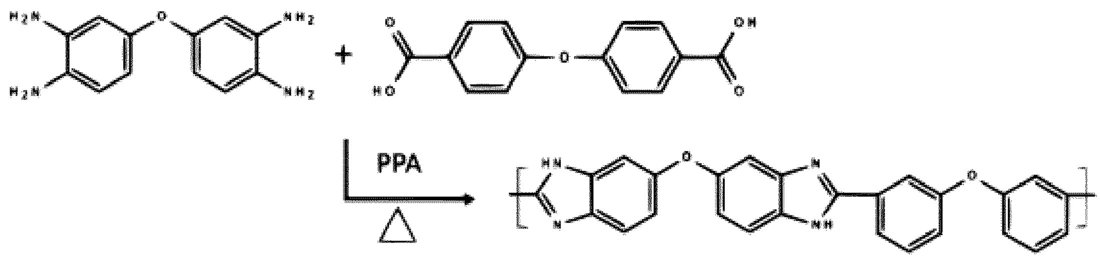


(R1)

Both of the starting materials are commercially available. The compound 4,4'-oxydibenzene-1,2-diamine, for example, is commercially available from Alfa Chemistry (CAS 2676-59-7).

In another preferred embodiment, the crosslinked benzimidazole polymer is a crosslinked benzimidazole polymer comprising a repeating unit represented by the following formula (Ib):

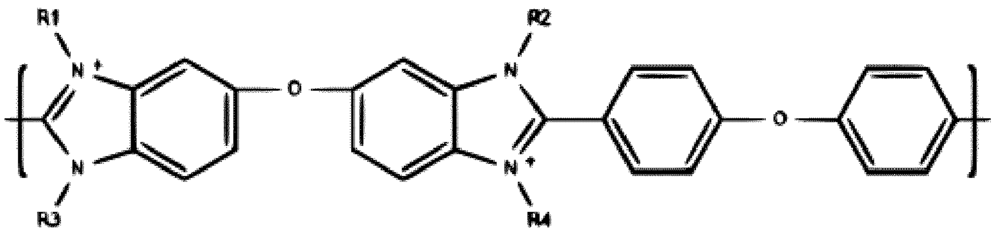

(Ib),

wherein R1 to R4 are independently from each other $C_1$ to $C_6$ alkyl. A benzimidazole polymer consisting of the repeating unit of Formula (Ib) may be referred to as "alkylated PBI-OO".

To obtain the alkylated PBI-OO, a blend of lithium chloride and PBI-OO may be dissolved in anhydrous NMP under an inert argon environment. Subsequently, sodium hydride (as a 60% suspension in hexane) and an appropriate alkylating agent, including but not limited to iodomethane or benzyl bromide, may be added to the solution. The reaction may be carried out in accordance with reaction formula (R2) as presented below:

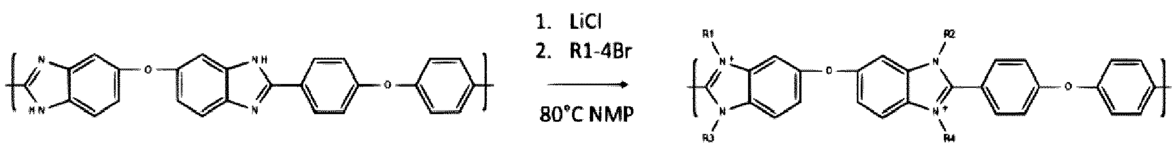


(R2)

In yet another preferred embodiment, the crosslinked benzimidazole polymer is a crosslinked benzimidazole polymer comprising a repeating unit represented by the following formula (Ic):

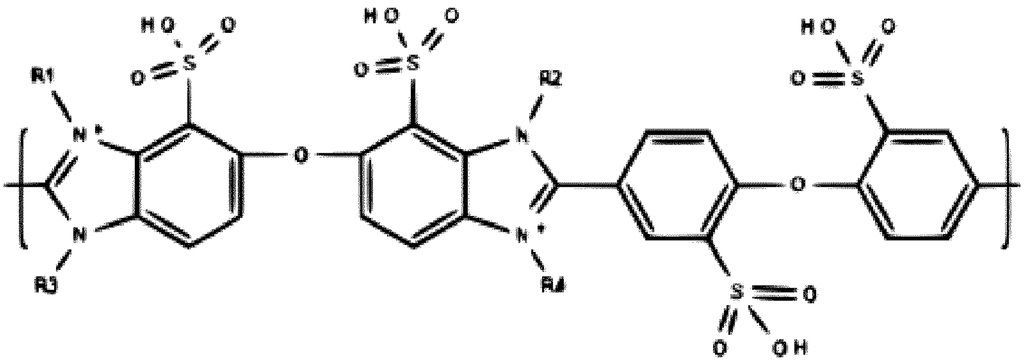

(Ic),

wherein R1 to R4 are independently from each other $C_1$ to $C_6$ alkyl. A benzimidazole polymer consisting of the repeating unit of Formula (Ic) may be referred to as "sulfonated PBI-OO".

To obtain the sulfonated PBI-OO, a direct sulfonation process may be performed on the alkylated PBI-OO utilizing concentrated sulfuric acid, preferably under otherwise moderate reaction conditions. The temperature for this reaction may be maintained in a range of 40 to 100°C, while the reaction duration may be between 1 and 24 hours. The reaction is reflected by reaction formula (R3) below:

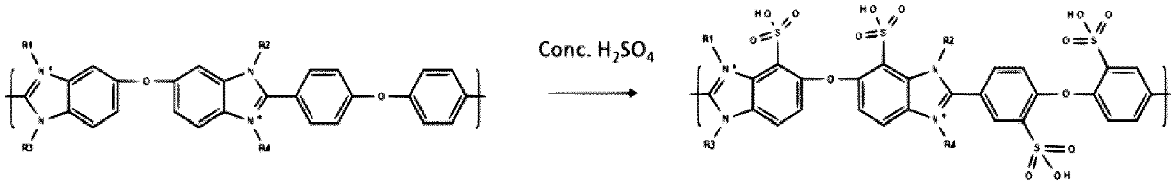


(R3)

The sulfonation degree of the sulfonated PBI-OO may be in a range from 1 to 5 mol-%, preferably from 2.5 to 5 mol-%, when measured as the number of moles of sulfur atoms per benzimidazole-based repeating unit. A method for measuring the number of moles of sulfur atoms per benzimidazole-based repeating unit is by means of elemental analysis, for example as described in Peron et al. (Peron, J., Ruiz, E., Jones, D. J., Rozière, J., J. Membr. Sci. 314, 1-2, 2008).

The crosslinked benzimidazole polymer may further comprise another repeating unit represented by the following Formula (I'):

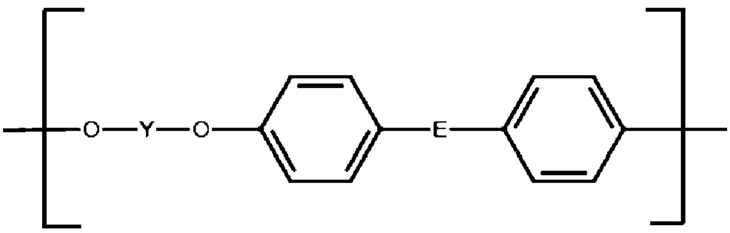

(I')

In Formula (I'), E may be either CO or $SO_2$, and Y may be an optionally substituted diphenylene or optionally substituted phenylene. In this context, a suitable substituent for diphenylene and phenylene is a sulfonic acid group.

Accordingly, the second repeating unit may have the following Formula (I'a):

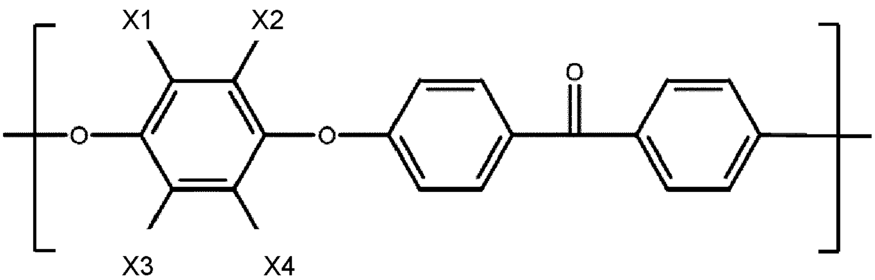

(I'a).

In Formula (I'a), each of X1 to X4 may independently be a hydrogen or a sulfonic acid group, preferably one of X1 to X4 is a sulfonic acid group and the other ones of X1 to X4 are hydrogen.

The benzimidazole polymer preferably has a number average molecular weight $M_n$ between 20 to 100 kg·mol$^{-1}$, preferably 50 to 60 kg·mol$^{-1}$. The number average molecular weight $M_n$ is preferably measured by gel permeation chromatography (in DMF at 60 °C, addition 0.5 g LiCl).

The crosslinked benzimidazole polymer may further comprise ionic crosslinkages and/or covalent crosslinkages.

The covalent crosslinkages are preferably selected from a unit having a structure represented by one of the following Formulae (II) and (III):

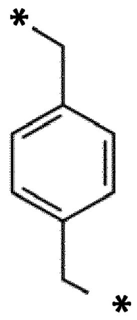
(II)
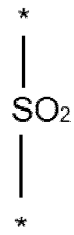
(III),

wherein * represent bonding positions.

Accordingly, the crosslinkages may have a structure represented by one of Formulae (IIa) and (IIIa) below:

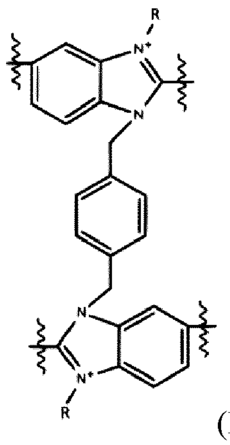
(IIa)
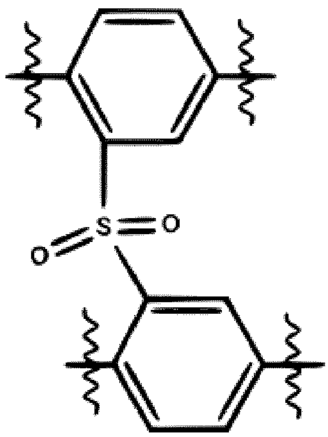
(IIIa).

The ionic crosslinkages may be interactions as represented by Formula (IIIb) below:

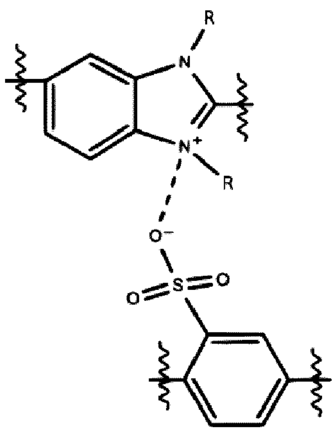
(IIIb).

Anion Exchange Membrane (AEM)

The anion-exchange membrane comprising the crosslinked benzimidazole polymer may be a cast membrane. In this case, the anion-exchange membrane may be obtained by providing a casting solution comprising the benzimidazole polymer and casting the solution. The crosslinkages may be created after or during the casting step. This membrane possesses intrinsic properties that effectively transport hydroxide anions, making it suitable for use as an anion exchange membrane. The imidazolium groups present in the benzimidazole-based polymer are primarily responsible for enhancing the anion exchange properties of the membrane.

Ionic crosslinkages, for example, such as the one represented by Formula (IIIb), may be created during the casting step by self-assembly and alignment of the polymeric chains.

Covalent crosslinkages may either be obtained by (1) adding a crosslinker, such as $\alpha$,$\alpha$0-dibromo-p-xylene, to the casting solution, followed by casting and heating the cast membrane, for example to about 80°C for 8 hours or by (2) subjecting the cast membrane to elevated temperatures from 300 to 400 °C, preferably to about 350°C. Crosslinkages, such as the one represented by Formula (IIa), may preferably be obtained by measure (1), whereas crosslinkages, such as the one represented by Formula (IIIa), may preferably be obtained by measure (2). The specific type of crosslinkages may be chosen based on the intended application and desired (mechanical) properties of the resulting membrane.

When the benzimidazole polymer comprises covalent crosslinkages, the content of the crosslinkages may be 1 to 20 mol-%, preferably 5 to 15 mol-%, per benzimidazole based repeating unit. If the content of the crosslinkages is more than 20 mol-%, transport of hydroxide ions may be hindered. If the content of the crosslinkages is less than 1 mol-% of a crosslinking unit per benzimidazole based repeating unit, zincate ions may not be effectively prevented from moving towards the active material of the positive electrode.

At the same time or alternatively, it is preferred when the anion-exchange membrane has pores with an average diameter which is less than 0.34 nm, preferably to 0.10 to 0.32 nm. When the average diameter of the pores is larger than 0.34 nm, zincate ions may not be effectively prevented from passing the AEM comprising the crosslinked benzimidazole polymer.

The AEM may be either be mounted in a frame or formed as a pouch.

When the AEM is mounted in a frame, the frame may be a polymeric frame. It is advantageous if the frame is stable in alkaline and highly alkaline media. In one embodiment, the frame may essentially consist of an ABS composition or a PMMA composition. Sealing of the frame is possible either by means of a mechanical seal (*e.g.* by screwing) or by applying an adhesive. Furthermore, it is appreciated that, in a symmetrical setup of the electrode, each of the two AEMs on each of the two opposing sides of the current collector may be mounted in a frame. In the latter case, a seal between the two frames is preferably created by applying an adhesive.

When the AEM is formed as a pouch, the pouch surrounds at least the current collector and the active material. The pouch is preferably sealed by an adhesive or glue, in particular by an epoxy-based adhesive or epoxy-based glue. The adhesive or glue may be a two-component adhesive or glue. It may comprise a binder component and hardening component. A particularly preferred adhesive or glue is a bisphenol-F-(epichlorhydrin) epoxy resin or a bisphenol-A-(epichlorhydrin) epoxy resin. Such adhesives or glues are commercially available under the trademark name "UHU plus endfest 300" from UHU GmbH, Buhl in Baden.

In another embodiment, the AEM has a thickness from 1.0 $\mu$m to 60 $\mu$m, preferably from 5.0 $\mu$m to 50 $\mu$m, more preferably from 10.0 $\mu$m to 40 $\mu$m.

It is further preferred when the weight of the crosslinked benzimidazole polymer relative to the weight of the AEM is in a range from 70-99.9 wt.-%, preferably 90-99.9 wt.-%. In a particularly preferred embodiment, the AEM consists of or substantially consists of the crosslinked benzimidazole polymer.

Furthermore, the AEM preferably has a carbon content of 80 - 85 at%, more preferably 80.0 - 84.0 at%, an oxygen content of 4.0 - 6.0 at%, an nitrogen content of 10 - 15 at%, a sulfur content of 0.05 - 0.2 at%, and a bromine content of 0.05 - 1.0 at%, more preferably 0.1 - 0.2 at% according to an EDX elemental analysis using an accelerating voltage of 30 kV and a probe current of 300 pA (measured, for example, with a S9000G TESCAN FIB-SEM, TESCAN, Czech).

Coating Layer

In one embodiment of the present invention, the electrode further comprises a coating layer between the active material and the anion-exchange membrane. In an electrode having a symmetrical setup, the coating layer is disposed between the active material and the AEM on each of the two opposing sides of the current collector.

The coating layer may comprise the same polymer type as the anion exchange membrane. In other words, the coating layer preferably comprises a benzimidazole polymer, more preferably a benzimidazole polymer comprising the repeating unit represented by the following Formula (I) as described above. The coating layer preferably has a thickness of less than 1.0 $\mu$m, such as from 0.01 to less than 1.0 $\mu$m or from 0.1 to less than 1.0 $\mu$m.

Coating the electrode active material with the same polymer type as used in the anion exchange membrane (AEM) significantly improves adhesion between the two, creating entanglements at their interface.

If the electrode according to the present invention is a positive electrode, the presence of a coating layer results in better electrochemical performance and increased retention of soluble Mn species, like MnOOH, formed during battery discharge. The coating layer is effective in keeping these species in close proximity to the electrode surface, promoting their precipitation onto it. Without a coating layer, Mn species may be able to diffuse away, making it challenging to re-oxidize them back to MnOz due to their distance from the electrode surface.

If the electrode according to the present invention is a negative electrode, the presence of a coating layer improves electrochemical performance and, moreover, mitigates the migration of zincate ions away from the electrode surface. During battery discharge, the coating layer maintains zincate ions in close proximity to the Zn electrode, ensuring their accessibility for reduction back into metallic zinc during the charging process. As a result, the coating layer may further enhance the reversibility of the negative electrode, contributing to overall battery efficiency and longevity.

## Active Material

When the active material in the electrode of the present invention comprises $MnO_2$, it may further comprise carbon and $Bi_2O_3$ and an optional binder material.

If present, the binder material is preferably selected from the group consisting of a benzimidazole polymer, preferably a benzimidazole polymer comprising the repeating unit represented by the following Formula (I); cellulose and fluoropolymer, such as polytetrafluoroethylene (PTFE) and fluorinated ethylene propylene.

It is further preferred when the active material comprises 20-60 wt.-% $MnO_2$ with respect to the total weight of the active material.

The active material may comprise at least one compound selected from the group consisting of carbon, $Bi_2O_3$, a binder material or mixtures thereof, wherein preferably the content of carbon is 30-45 wt.-%, the content of $Bi_2O_3$ is 5-15 wt.-%, and the content of the binder material is 5-15 wt.-% with respect to the total weight of the active material.

When the active material comprises $MnO_2$, the $MnO_2$ is preferably alpha-$MnO_2$ or electrolytic manganese dioxide (EMD). Although the latter two polymorphs are preferred, the $MnO_2$ may also be a polymorph selected from the group consisting of beta-$MnO_2$, gamma-$MnO_2$, delta-$MnO_2$, epsilon-$MnO_2$, or lambda-$MnO_2$ and combinations thereof as well as combinations thereof with either or both of alpha-$MnO_2$ and EMD.

In case the active material is alpha-$MnO_2$, it may be prepared in a microwave-assisted hydrothermal process. Furthermore, the alpha-$MnO_2$ may be a Cu-exchanged alpha-$MnO_2$ ($Cu^{2+}$/alpha-$MnO_2$).

In case the active material is EMD, it may be electrolytically produced. In a particular embodiment, EMD corresponds to electrolytically produced gamma-$MnO_2$ and is an intergrowth of the beta-(pyrolusite) and R-(ramsdellite) phases. Advantages of EMD are its shallow potential drop during discharge, its structure facilitates proton transfer and its availability at low cost.

The active material may further comprise a nickel-based additive, preferably in an amount of 0.5 - 10 wt.-%, more preferably in an amount of 1.0 - 2.0 wt.-% with respect to the total weight of the active material.

## Current Collector

The current collector may have different configurations. In particular, the current collector may be configured as a mesh, a foil or a foam. For example, the current collector may be a nickel foam for the positive electrode and a copper foil for the negative electrode.

Furthermore, the current collector preferably comprises a tab portion. A tab portion may be understood as a portion that extends beyond the periphery of the other components of the electrode. Due to the tab portion it is easy to provide an electrical connection to the current collector which would otherwise be difficult to access as it is sandwiched by the other components of the electrode.

## Rechargeable Alkaline Battery

The present invention further provides a rechargeable alkaline battery comprising the electrode as described above as a positive electrode, when the active material comprises $MnO_2$, or as a negative electrode, when the active material comprises Zn.

When the rechargeable alkaline battery includes the electrode as described above as a positive electrode, the battery may further include a zinc negative electrode and an alkaline electrolyte. When the rechargeable alkaline battery includes the electrode as described above as a negative electrode, the battery may further include a manganese oxide based positive electrode and an alkaline electrolyte.

The rechargeable alkaline battery may further comprise a housing and an additional separator. In an embodiment, the housing can be a molded box or container.

The rechargeable alkaline battery may be a prismatic, a cylindrical or a pouch battery cell.

## Brief Description of the Drawings

Embodiments of the present invention are illustrated by way of example and are not limited by the figures of the accompanying drawings in which identical references represent similar elements.

Fig. 1 is a schematic representation of an exemplary $MnO_2$ electrode according to the present invention in an exploded view;

Fig. 2 displays a sequence of digital photographs that demonstrate the process of assembling and mounting the electrodes in a frame;

Fig. 3 shows the excellent capacity retention of an inventive $MnO_2$ electrode as opposed to a plain $MnO_2$ electrode;

Fig. 4 shows the results of a durability-performance test of the inventive $MnO_2$ electrode at 22% and 44% D.o.D.;

Fig. 5 shows the results of a durability-performance test of the inventive $MnO_2$ electrode at 100% D.o.D.;

Fig. 6 shows charge/discharge profiles at 100% D.o.D. of three inventive $MnO_2$ electrodes with different areal capacities;

Figs. 7a and 7b show the measurement setup for anodic stripping voltammetry tests;

Figs. 8a to 8i show the data that are used for establishing a calibration curve for anodic stripping voltammetry as well as the results of tests with an anion exchange membrane comprising a crosslinked benzimidazole polymer and other anion exchange membranes;

Figs. 9a to 9e show the development of voltage vs. capacity curves for several charge and discharge cycles for one $MnO_2$ electrode according to the present invention and several comparative electrodes against a Hg/HgO reference electrode in 10 M KOH + 0.25 M ZnO;

Figs. 10a and 10b show the development of voltage vs. capacity curves for a single cell containing both a positive MnOz and negative Zn electrode over multiple charge and discharge cycles at varying D.o.D. levels. Additionally, these figures depict the associated electrochemical setup and properties of the electrodes and electrolyte;

Figs. 11a to 11c depict the infrared spectra of the exemplary anion exchange membranes along with a comparison to literature data. Digital photographs of anion exchange membranes in DMAc taken before and after 8 hours at 80°C are presented in Fig. 11d.

## Detailed Description of the Drawings and Examples

**Figure** 1 is a schematic representation of an exemplary $MnO_2$ electrode according to the present invention in an exploded view. The current collector 1 is configured as a mesh and has a tab portion 1a to provide for an electrical connection. It is sandwiched between two layers of active material 2 and 2'. The active material layers 2 and 2' contain $MnO_2$, carbon and a PTFE binder material. Adjacent to each of the active material layers 2 and 2' is a coating layer 3 and 3' substantially consisting of a crosslinked benzimidazole polymer. At the outmost side there is an anion-exchange membrane 4 and 4', respectively. Although the anion-exchange membranes 4 and 4' are illustrated as being mounted in a polymeric frame 5 and 5' in fig. 1, they can also be formed into a pouch and sealed in a pouch shape.

**Figures 2a and 2b** depict a step-by-step assembly process for both the $MnO_2$ positive electrode (a) and Zn negative electrode (b), enclosed within polymeric frames.

For the $MnO_2$ positive electrode assembly (fig. 2a), the following steps are taken: Step 1: A first polymeric (ABS, PMMA) frame (or "plastic frame") is coated with epoxy glue. Step 2: A first membrane (AEM) is positioned on the frame that is coated with epoxy glue. Step 3: A current collector which is loaded with a $MnO_2$ based active material on both sides is placed in the center of the first membrane, and a layer of epoxy glue is deposited on the membrane's edges, avoiding contact with the surface of the current collector. Step 4: A second membrane layer is placed on top of the setup of the first membrane and the current collector, and glue is applied to connect the two membranes. A third

layer of glue is deposited on top of the membrane edges. Step 5: A second polymeric frame (ABS, PMMA) is placed on top of the membrane, and the obtained electrode is gently pressed for 12 hours to cure the glue and seal the assembly.

For the Zn negative electrode assembly (fig. 2b), the following steps are taken: Step 1: A first polymeric (ABS, PMMA) frame (or "plastic frame") is coated with epoxy glue. Step 2: A first membrane (AEM), which has a slit on the upper side, is placed on the frame coated with epoxy glue. The slit allows gases generated during cycling to be released (such as a vent), preventing a pressure buildup within the electrode. Step 3: A current collector which is loaded with a Zn based active material on both sides is placed in the center of the first membrane, and a layer of epoxy glue is applied on the membrane's edges and the upper side (slit) while avoiding contact with the surface of the current collector. Step 4: A second membrane is placed on top of the setup of the first membrane and the current collector. Glue is applied to connect the two membranes, and a third layer of glue is deposited on top of the membrane edges. Step 5: A second polymeric frame (ABS, PMMA) is placed on top of the membrane, and the electrode is gently pressed for 12 hours to cure the glue and seal the assembly.

Electrodes

Electrodes 20, 30 and 40 have been prepared by following the steps that are indicated in table 1 below.

**Table 1:** Preparation of electrodes.

| Electrode | Nickname | Process Steps |
|---|---|---|
| Electrode 20 | Plain electrode | A.1 + A.2 + A.3 |
| Electrode 30 | Inventive (positive) electrode mounted in a polymeric frame | A.1 + A.2 + A.3 + A.4 + A.5 |
| Electrode 40 | Inventive (negative) electrode mounted in a polymeric frame | A.1 + A.2 + A.3' + A.4 + A.5 |

Process Steps

A.1 Synthesis of $MnO_2$

An alpha-$MnO_2$ has been prepared as the $MnO_2$ polymorph. To that end, a microwave-assisted hydrothermal process was employed, with a protocol adapted from a scientific paper (Huang, H., Sithambaram, S., Chen, C. H., King'ondu Kithongo, C., Xu, L., Iyer, A., Garces, H. F., Suib, S. L., Chemistry of materials, 22(12), 3664-3669, 2010). First, in a 1 L PTFE reaction vial, 15.7 g $K_2SO_4$ (0.09 mol) (Merck, Emsure®, ACS, ISO, Reag. Ph. Eur), 24.3 g $K_2S_2O_8$ (0.09 mol) (Fluka, puriss. P.a.) and 10.15 g $MnSO_4 \cdot H_2O$ (0.06 mol) (Merck, ACS, Reag. Pg Eur) were mixed with 0.5 L deionized water (Milli-Q® water, TKA, water conductivity 0.055 $\mu S \cdot cm^{-1}$). The mixture was transferred to the microwave reactor (Masterwave BTR, Anton Paar GmbH), kept under stirring for 10 min and then hydrothermally treated by heating at 200°C for 10 min. The synthesis product was washed with deionized water and collected by using a pressurized filtration system (Sartorius Stedim 16249 316 stainless steel). Finally, the material was dried under vacuum at 60°C overnight.

A.2 Preparation of active material

The active material has been prepared as a mixture of 40 wt.-% of the above alpha-$MnO_2$, 25 wt.-% of a commercially available carbon black (C-NERGY SUPER C65, Imerys Graphite & Carbon), 20 wt.-% Ni powder (APS 3-7 micron, 99.9%, Alfa Aesar), 5 wt.-% $Bi_2O_3$ powder (99.999 % trace metals basis, Sigma-Aldrich) and 10 wt.-% commercial PTFE suspension (3M™ Dyneon™ PTFE TF 5060GZ). Firstly a slurry was prepared by mixing the above materials with ultra-pure water. The volume of water was chosen to obtain a slurry with a solid content of about 3 wt.-%. The mixture was then stirred for 10 min, sonicated for other 10 min and dried using a rotary evaporator system (Rotavapor® R-300, BÜCHI), where the solvent was evaporated by rotating the mixture at 70°C and under 100 mbar pressure. The resulting powder was maintained under vacuum at 60°C overnight after the solvent was completely removed.

A.3 Assembly of the positive $MnO_2$ electrode

A porous nickel foam was used as the current collector. Prior to application of the active material, the current collector was cleaned with a sonication bath that included 10 minutes in acetone, 10 minutes in 2-propanol, and 10 minutes in ultra-pure water. The current collector was then immersed for another 10 minutes in a 6 M HCl solution, rinsed

numerous times with ultra-pure water, and finally dried. An equal amount of the dried active material (dough/paste) was spread on both sides of the current collector and was pressed for 1 min at 1.5 $kN\cdot cm^{-2}$ (150 $kg\cdot cm^{-2}$ = 15 MPa) in order to obtain a plain electrode. The plain electrode has a total thickness of 1.5 mm.

A.3' Assembly of the negative Zn electrode

The current collector used was a 200 μm thick Cu foil. Before the active material (Zn) was applied, the current collector underwent a thorough cleaning process that included a sonication bath with 10-minute intervals in acetone, 2-propanol, and ultra-pure water, respectively, followed by a drying step. Two Zn plates, each 400 μm thick, were then spot-welded onto the rims of both sides of the copper current collector. The resulting configuration is a plain electrode consisting of a Cu-foil sandwiched between two Zn-plates, with a total thickness of 1.0 mm.

A.4 Coating

The plain electrode has been dip coated using a commercial benzimidazole polymer/DMAc solution (FUMION® AMLD, 5-7 wt.-%) and dried using a heat gun. The dip-coating/drying procedure was repeated three times. The coated electrode was obtained after storing/drying in an oven at 80°C for at least two hours.

A.5 Preparation of electrode-membrane-ABS frame assembly.

To produce the inventive electrode mounted in a polymeric frame, the coated electrode was enclosed within a pouch made of a commercially available crosslinked benzimidazole polymer-based membrane (FUMASEP® FAAM-40) and the pouch was arranged between ABS polymeric frames, as shown in fig. 2. The assembly was then immersed in a 6 M KOH solution for a minimum of 24 hours after the glue was cured.

Testing of Electrodes

The electrodes as prepared above have been tested by use of a VMP3 (Bio-logic) instrument as a current source / sink in galvanostatic mode. All measurements were performed under ambient atmosphere and at regulated room temperature (T = 21 °C). The results are shown in Figures 3-5.

**Figure 3** demonstrates the exceptional capacity retention of inventive electrode 30, having a coating layer and an AEM, both of which comprise a crosslinked benzimidazole polymer. In contrast, plain electrode 20 does neither have a coating layer nor an AEM. While inventive electrode 30 maintains a capacity retention of 100% even after more than 80 charge/discharge-cycles at current density j = 1 $mA\cdot cm^{-2}$, the capacity retention of electrode 20 decreases to 50 % after approximately 30 cycles at 1 $mA\cdot cm^{-2}$. This capacity decrease suggests that the discharge process results in an irreversible formation of inactive hetaerolite. On the other hand, electrode 30 can prevent the formation of the inactive phase by blocking the crossing of zincate ions from reaching the MnOz active material. It is noted that the presence of zincate ions $Zn(OH)_4^{2-}$ is due to the dissolution of ZnO in the concentrated alkaline electrolyte.

**Figure 4** shows the results of a durability-performance test of an inventive electrode 30. Galvanostatic charge-discharge cycles were conducted with electrode 30 in 6 M KOH + 0.25 M ZnO electrolyte, prepared from ultrapure water (18 MΩ·cm) and an appropriate amount of KOH pellets (for analysis, ≥ 85.0 %, Merck) and ZnO powder (ReagentPlus®, 99.9 %, Sigma-Aldrich). The three-electrode cell design that has been used for this study is described in J. Power Sources 482 (2021) 22890. A Ni-plate served as counter electrode and a home-made Hg/HgO electrode was used as reference electrode. The geometric area exposed to the electrolyte was 1 $cm^2$. The MnOz positive electrode utilized in this experiment was arranged between polymeric frames according to the example shown in fig. 2, resulting in an areal capacity of 45 $mAh\cdot cm^{-2}$.

The D.o.D. was selected to achieve an expected nominal voltage of about 1 V, which is a minimum threshold voltage of conventional electronic devices. The nominal voltage value has been determined by integrating the voltage-capacity profile and dividing it by the total discharge capacity per cycle. It is important to note that the asterisk* on the y-label denotes that this value has been calculated assuming no polarization from the Zn electrode (i.e. the electrode potential versus Hg/HgO has been converted to $Zn/Zn(OH)_4^{2-}$ at a potential of +1.35 V with respect to Hg/HgO). The test includes charge-discharge cycles under the conditions indicated in table 2 below.

**Table 2:** Conditions of the charge-discharge cycles applied to arrive at the results in fig. 4.

| **Cycle number** | **Current density ($mA \cdot cm^{-2}$)** | **Capacity requested (mAh)** | **C-rate (relative to requested capacity)** | **D.o.D. (%)** |
|---|---|---|---|---|
| 0-39 | 1 | 10 | 0.1 | 22 |
| 40-42 | 2 | 10 | 0.2 | 22 |
| 43 | 1 | 10 | 0.1 | 22 |
| 44-46 | 3 | 10 | 0.3 | 22 |
| 47 | 1 | 10 | 0.1 | 22 |
| 48-50 | 4 | 10 | 0.4 | 22 |
| 51 | 1 | 10 | 0.1 | 22 |
| 52-54 | 5 | 10 | 0.5 | 22 |
| 55 | 1 | 10 | 0.1 | 22 |
| 56-58 | 6 | 10 | 0.6 | 22 |
| 59 | 1 | 10 | 0.1 | 22 |
| 60-62 | 7 | 10 | 0.7 | 22 |
| 63 | 1 | 10 | 0.1 | 22 |
| 64-66 | 8 | 10 | 0.8 | 22 |
| 67 | 1 | 10 | 0.1 | 22 |
| 68-70 | 9 | 10 | 0.9 | 22 |
| 71 | 1 | 10 | 0.1 | 22 |
| 72-74 | 10 | 10 | 1.0 | 22 |
| 75-141 | 1 | 10 | 0.1 | 22 |
| 142-150 | 2 | 10 | 0.2 | 22 |
| 151-256 | 5 | 10 | 0.5 | 22 |
| 257-267 | 2 (charge) & 5 (discharge) | 10 | 0.2 & 0.5 | 22 |
| 268-272 | 2 | 10 | 0.2 | 22 |
| 273-end | 2 | 20 | 0.1 | 44 |

The results show that electrode 30 exhibits an excellent capacity retention of 100% even at higher current densities for the entire duration of the experiment, which is more than 3360 h (~ 140 days). Furthermore, the results shows that even after cycling at $j = 10\ mA \cdot cm^{-2}$, the electrode is able to restore to the initial end-of-discharge voltage. After ca. 100 cycles, the nominal voltage decreases in a shallow fashion with increasing cycle number. Because the voltage recovered to its previous value once the electrolyte was refilled, it is considered that this phenomenon is due to a change in the electrolyte composition rather than a deterioration of the electrode.

**Figure 5** shows the results of a durability-performance test of inventive electrode 30 at 100% D.o.D. The durability-performance test has been carried out in an analogous way as described in the context of fig. 4 above with the difference that the charge-discharge cycles were conducted in 10 M KOH + 0.25 M ZnO electrolyte and the areal capacity was 27 $mAh \cdot cm^{-2}$. The current density was 1-5 $mA \cdot cm^{-2}$ and the D.o.D reached (2 e-): 100 %. The detailed conditions under which the test has been performed are listed in table 3 below.

**Table 3:** Conditions of the charge-discharge cycles applied to arrive at the results in fig. 5.

| **Cycle number** | **Current density ($mA\ cm^{-2}$)** | **Capacity requested (mAh)** | **C-rate (relative to requested capacity)** | **D.o.D. (%)** |
|---|---|---|---|---|
| 0-19 | 1 | 10 | 0.1 | 37 |

(continued)

| Cycle number | Current density (mA $cm^{-2}$) | Capacity requested (mAh) | C-rate (relative to requested capacity) | D.o.D. (%) |
|---|---|---|---|---|
| 20-29 | 1 | 27 | 0.04 | 100 |
| 30-34 | 2 | 27 | 0.08 | 100 |
| 35-39 | 3 | 27 | 0.11 | 100 |
| 40-44 | 4 | 27 | 0.15 | 100 |
| 45-49 | 5 | 27 | 0.19 | 100 |
| 50-92 | 2 | 27 | 0.08 | 100 |
| 93-125 | 1 | 27 | 0.04 | 100 |

**Figure 6** shows discharge and charge profiles at 100 % D.o.D. of inventive electrodes 30 with different areal capacities as specified in table 4 below:

**Table 4:** Areal Capacities of measured electrodes in fig. 6.

| | Areal Capacity / $mAh \cdot cm^{-2}$ |
|---|---|
| Electrode 30-1 | 14.7 |
| Electrode 30-2 | 18.6 |
| Electrode 30-3 | 25.8 |

**Figure 7a and 7b** show the measurement setup for anodic stripping voltammetry tests. Fig. 7a shows an electrochemical cell with a separation between the two cell halves. One of the two cell halves contains a solution of 6 M KOH with zincate ions (called "feed solution") and the other contains a zincate free 6M KOH solution (called "draw solution"). A glassy carbon (GC) rotating disc electrode (RDE) is used as a working electrode (WE). Moreover, an Au rod and a Hg/HgO electrode are used as the counter electrode (CE) and reference electrode (RE), respectively. As can be seen from the schematic detail view in fig. 7b, the anion-exchange membrane (AEM) is arranged between the glass flanges of the cell halves in a sealed manner.

**Figure 8a** shows the data that have been acquired via square-wave-voltammetry in order to establish a calibration curve. The area under the peaks is assumed to be proportional to the zincate concentration in the calibration solutions.

**Figures 8b to 8i** show the results of anodic stripping voltammetry tests with different anion exchange membranes. The results of anodic stripping voltammetry tests with AEM comprising a crosslinked benzimidazole polymer (FAAM 40, FAAM 5 and Fumion AM) are shown in Figs. 8g to 8i. The results of anodic stripping voltammetry tests with other AEM are shown in Figs. 8b to 8f.

The specifications of the tested AEM are listed in table 5 below.

**Table 5:** Specifications of tested AEM.

| **Tested Membranes** | |
|---|---|
| **FAAM 40** | Non-reinforced membrane comprising crosslinked benzimidazole polymer, thickness = 40 μm.<br>Commercially available from FuMA-Tech, Germany under the trademark name fumasep FAAM-40 |
| **FAAM 5** | Non-reinforced membrane comprising crosslinked benzimidazole polymer, thickness = 5 μm.<br>Commercially available from FuMA-Tech, Germany under the trademark name fumasep FAAM-5 |

(continued)

| Tested Membranes | |
|---|---|
| **Fumion AM** | Non-reinforced membrane produced by casting a solution consisting of 2.5 wt.% polybenzimidazole polymer Fumion AM in DMAc. Thickness = 40 μm. Commercially available from FuMA-Tech, Germany under the trademark name fumion AM. |
| **Celgard** | Microporous polypropylene membrane, surfactant coated, thickness = 25 μm, micropores between 0.03 and 0.2 μm Commercially available from Celgard, Inc. of Charlotte, N.C., under the trademark name Celgard 3401 |
| **Celazole** | Membrane comprising non-crosslinked benzimidazole polymer, thickness = 55 μm. Commercially available from PBI Performance Products, Inc. of Charlotte, N.C., under the trademark name Celazole® PBI. |
| **Ionomr_AH1_HNN8-50-X** | Membrane comprising non-crosslinked methylated polybenzimidazole polymer, thickness = 45 μm. Commercially available from Ionomr Innovations, Inc. Canada, under the trademark name AEMION. |
| **Tokuyama_A-006** | Hydrocarbon-based membrane with quaternary ammonium groups, thickness = 30 μm. Commercially available from Tokuyama Corporation, Japan under the trademark name Tokuyama. |
| **Pention-AEM-72-20-5%** | Membrane comprising crosslinked poly(norbornene) polymer, thickness = 20 μm. Commercially available from Xergy Inc. Harrington, DE, under the trademark name Pention. |

For the anodic stripping voltammetry test with each of the above AEMs, a 30 s cleaning step is performed at 0.3 V vs. Hg/HgO under stirring. Next, a 5 min accumulation step at 1.75 V vs. Hg/HgO is performed, also under stirring, as this has been found to be the potential with the highest integrated charge for the Zn peak. The stirring was then stopped. After 15 s, the stripping voltammetry step was performed between - 1.5 V and 0.0 V using a square-wave voltammetry profile with a 5 mV amplitude, 25 mV pulse, and 0.05 s duration resulting in a formal scan rate of 100 mV $s^{-1}$.

The efficacy of various membranes in blocking the diffusion of zincate ions has been investigated. Testing with Celgard (fig. 8b) revealed that the draw solution reached a zinc concentration of 5 ppm after just 3 hours. By contrast, Pention (fig. 8c) required 8 hours, Tokuyama (fig. 8d) required 20 hours, Celazole (fig. 8e) required 48 hours, and Ionomr (fig. 8f) required 50 hours to reach the same concentration. In contrast, the crosslinked benzimidazole polymer based membranes FAAM 40 (fig. 8g), FAAM 5 (fig. 8h), and Fumion AM (fig. 8i) from FuMA-Tech showed no detectable levels of zinc in the draw solution during the entire experiment. Notably, the experiment involving membrane FAAM 40 was conducted over an extended duration of 46 days. Surprisingly, even the 5 μm-thick membrane FAAM 5 displayed excellent zincate-blocking properties, thus indicating that such properties are independent of membrane thickness. Furthermore, the Fumion AM membrane, which is ionically crosslinked instead of covalently crosslinked (as in the case of FAAM 40 and FAAM 5), demonstrated a similar ability to block the diffusion of zincate ions. This indicates that the membrane's capacity to block zincate ions is independent of the type of crosslinker used.

**Figures 9a to 9e** show the development of voltage vs. capacity curves for several charge and discharge cycles for one electrode according to the present invention (fig. 9a) and several comparative electrodes (fig. 9b-9e) against a Hg/HgO reference electrode in an alkaline electrolyte. The electrode potential versus Hg/HgO has been converted to $Zn/Zn(OH)_4^{2-}$ at a potential of +1.35 V with respect to Hg/HgO. The electrode according to the present invention included FAAM 40 as the crosslinked benzimidazole polymer-based AEM. The comparative electrodes comprised other AEMs. For each of the AEM the characteristic elemental composition, as measured by means of EDX, is indicated in table 6 below.

**Table 6:** Specifications of AEM used in comparative electrodes.

<table>
<tr><th>Electrode in Figure</th><th>Membrane Type</th><th>Properties and EDX elemental composition</th></tr>
<tr><td>9a</td><td>FAAM 40</td><td>Thickness = 40 μm. Commercially available from FuMA-Tech, Germany under the trademark name fumasep FAAM-40.<br><table><tr><th>C (at%)</th><th>O (at%)</th><th>N (at%)</th><th>S (at%)</th><th>Br (at%)</th></tr><tr><td>81.17</td><td>5.34</td><td>13.29</td><td>0.09</td><td>0.13</td></tr></table></td></tr>
<tr><td>9b</td><td>Celazole</td><td>Thickness = 55 μm. Commercially available from PBI Performance Products, Inc. of Charlotte, N.C., under the trademark name Celazole® PBI.</td></tr>
</table>

<table>
<tr><td></td><td></td><td><table><tr><td>C (at%)</td><td>O (at%)</td><td>N (at%)</td><td>S (at%)</td><td>Br (at%)</td></tr><tr><td>78.25</td><td>3.09</td><td>18.64</td><td>0.00</td><td>0.02</td></tr></table></td></tr>
<tr><td>9c</td><td>Ionomr_AH1_HNN8-50-X</td><td>Thickness = 45 μm. Commercially available from Ionomr Innovations, Inc. Canada, under the trademark name AEMION.<table><tr><td>C (at%)</td><td>O (at%)</td><td>N (at%)</td><td>S (at%)</td><td>Br (at%)</td></tr><tr><td>87.74</td><td>1.81</td><td>7.48</td><td>0.54</td><td>0.00</td></tr></table></td></tr>
<tr><td>9d</td><td>Pention-AEM-72-20-5%</td><td>Thickness = 20 μm. Commercially available from Xergy Inc. Harrington, DE, under the trademark name Pention.<table><tr><td>C (at%)</td><td>O (at%)</td><td>N (at%)</td><td>S (at%)</td><td>Br (at%)</td></tr><tr><td>87.64</td><td>5.23</td><td>4.45</td><td>0.00</td><td>2.65</td></tr></table></td></tr>
<tr><td>9e</td><td>Tokuyama_A-006</td><td>Thickness = 30 μm. Commercially available from Tokuyama Corporation, Japan under the trademark name Tokuyama.<table><tr><td>C (at%)</td><td>O (at%)</td><td>N (at%)</td><td>S (at%)</td><td>Br (at%)</td></tr><tr><td>90.84</td><td>6.03</td><td>3.08</td><td>0.00</td><td>0.00</td></tr></table></td></tr>
</table>

The test protocol that has been used to obtain the voltage vs. capacity curves in figs. 9a-e started with an activation of the electrodes in 6 M KOH for at least 24 hours. Afterwards the electrodes were cycled in an alkaline electrolyte comprising 10 M KOH and 0.25 M ZnO at the current density listed in table 7 below. The capacity fading that could be observed per cycle for each of the electrodes can be retrieved from table 7 as well.

**Table 7:** Applied current densities and observed capacity fading for each of the electrodes.

| Electrode in Figure | Current density ($mA \cdot cm^{-2}$) | Capacity fading (%/cycle) $\frac{\left(\frac{Q_{initial}-Q_{final}}{Q_{initial}}\right)\times 100\%}{Cycle\ Nb.}$ |
|---|---|---|
| **9a** | 1.0 | 0 |
| **9b** | 1.0 | 6 |
| **9c** | 0.5 | 66 |

(continued)

| Electrode in Figure | Current density ($mA \cdot cm^{-2}$) | Capacity fading (%/cycle) $\frac{\left(\frac{Q_{initial}-Q_{final}}{Q_{initial}}\right)\times 100\%}{Cycle\ Nb.}$ |
|---|---|---|
| **9d** | 1.0 | 44 |
| **9e** | 0.1 | 14 |

**Figures 10a and b** relate to a full cell battery configuration including inventive electrodes. More specifically, fig. 10a illustrates an example where the inventive electrode 30 ($MnO_2$ positive electrode) and inventive electrode 40 (Zn negative electrode) were combined to form a full cell battery configuration (corresponding to a Zn-$MnO_2$ battery) against a Hg/HgO reference electrode RE, as shown in fig. 10a. The specifications of the electrodes are as follows:

$MnO_2$ electrode 30

- Geometric area: 12 $cm^2$
- Areal capacity: 10 $mAh \cdot cm^{-2}$

Zn electrode 40

- Geometric area: 12 $cm^2$
- Areal capacity: ~ 400 $mAh \cdot cm^{-2}$

To obtain the voltage vs. capacity curves in fig. 10b, the electrodes were first activated in 6 M KOH for at least 24 hours, followed by cycling in an alkaline electrolyte consisting of 6 M KOH at 1 $mA \cdot cm^{-2}$ and various D.o.D. levels, as listed in table 8 below.

**Table 8***:* Conditions of the charge-discharge cycles applied to arrive at the results in fig. 10b.

| Capacity requested (mAh) | Capacity achieved (mAh) | D.o.D. (%) | Number of cycles |
|---|---|---|---|
| 30 | 30 | 25 | 20 |
| 60 | 60 | 50 | 8 |
| 120 | 120 | 100 | 5 |

By utilizing the Hg/HgO reference electrode, it was possible to independently monitor the potential of both the positive and negative electrode. The cell voltage was determined by the following equation: Cell voltage = E(positive electrode) - E(negative electrode). The charging and discharging behavior (indicated by the arrows) of both, the $MnO_2$ and the Zn electrode, is reversible event at 100% D.o.D. levels. The excellent performance of the assembly including the inventive electrodes can be ascribed not only to its capacity to inhibit the generation of inert species by impeding zincate ions from accessing the $MnO_2$ active material, but also to the diminished migration of zincate ions from the Zn electrode surface. This is because, during battery discharge, the zincate ions are maintained near the Zn electrode surface, facilitating their ready availability during charging for reduction back into metallic $Zn^0$. Consequently, this promotes the reversibility of the negative electrode.

**Figures 11a-11d** show the results of the characterization of the exemplary AEMs as used above. Figs. 11a-11c display the FTIR spectra of the anion exchange membrane derived from Fumion AM, exhibiting chemical-physical characteristics that are analogous to the crosslinked benzimidazole polymer described in this patent application. As demonstrated in the reference (Peron, J., Ruiz, E., Jones, D. J., Rozière, J., J. Membr. Sci. 314, 247-256, 2008), Fumion AM displays characteristic bands of both PBI-OO (indicated by grey shaded vertical lines) and sulfonated sPBI-OO polymers (indicated by grey stars) in fig. 11a. The FTIR spectrum of Fumion AM shares similarities with that of the

Celazole membrane (fig. 11b), exhibiting two bands indicated by empty stars centered at 1560 $cm^{-1}$ and 1300 $cm^{-1}$. The absorption band at 1560 $cm^{-1}$ could be associated with the ring-vibration characteristic of conjugation between benzene and imidazole rings, as well as with the C=C and C=N stretching present in the benzene ring of the polybenzimidazole structure. The band at 1300 $cm^{-1}$ could represent the breathing mode of the imidazole ring structure of the polybenzimidazole polymer (Asensio, J. A., Borrós, S., Gómez-Romero, P., J. Polym. Sci. A: Polym. Chem. 40, 3703-3710, 2002). Additionally, the presence of alkyl groups may lead to C-H bending vibrations in the alkyl chain, which can also contribute to the absorption band in this region. Fig. 11c compares Fumion AM before and after covalent crosslinking (referred to as FAAM 40). Notably, the two spectra display remarkable similarity, rendering it difficult to distinguish between the two types of crosslinking based solely on IR analysis. However, immersing the membranes in DMAc at 80°C for 8 h resulted in complete dissolution of Fumion AM, while the covalently crosslinked membrane FAAM 40 showed no signs of dissolution in the solvent (fig. 11d). This observation supports the hypothesis that the ability to block the transport of zincate ions is independent of the nature of the crosslinker, but rather depends on the strong interaction between adjacent polymer chains, which can be either ionic or covalent, resulting in a robust network that effectively traps the zincate ions.

## Claims

**1.** Electrode for use in a rechargeable alkaline battery comprising, in the sequence from the interior to the exterior, a current collector, an active material which is loaded on the current collector, and an anion-exchange membrane,

wherein the active material comprises $MnO_2$ or Zn, and
**characterized in that** the anion-exchange membrane comprises a crosslinked benzimidazole polymer.

**2.** Electrode according to claim 1, wherein the crosslinked benzimidazole polymer comprises a repeating unit represented by the following Formula (I):

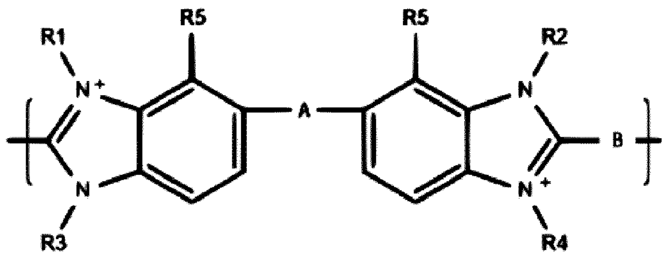

(I),

wherein A is a bond or oxygen,
wherein B is a bond, phenylene, 4,4'-diphenylene ether or sulfonated 4,4'-diphenylene ether,
wherein R1 to R4 are independently from each other selected from the group consisting of a lone electron pair, hydrogen, and $C_1$ to $C_6$ alkyl, and
wherein R5 is hydrogen or a sulfonic acid group, preferably hydrogen.

**3.** Electrode according to one of the preceding claims, wherein the crosslinked benzimidazole polymer comprises ionic crosslinkages and/or covalent crosslinkages, wherein the covalent crosslinkages are preferably selected from a unit having a structure represented by one of the following Formulae (II) and (III)

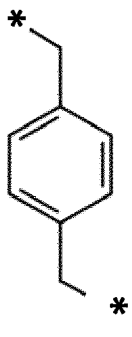

(II)

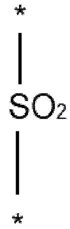

(III),

wherein * represent bonding positions.

**4.** Electrode according to one of the preceding claims, wherein the benzimidazole polymer has a number average molecular weight $M_n$ from 20 to 100 $kg \cdot mol^{-1}$, preferably from 50 to 60 $kg \cdot mol^{-1}$.

**5.** Electrode according to one of the preceding claims, wherein, when the benzimidazole polymer comprises covalent crosslinkages, the content of the crosslinkages is 1 to 20 mol-%, preferably 5 to 15 mol-%, per benzimidazole based repeating unit and/or wherein the anion exchange membrane has pores with an average diameter which is less than 0.34 nm, preferably from 0.10 to 0.32 nm.

**6.** Electrode according to one of the preceding claims, wherein the anion-exchange membrane is formed as a pouch surrounding at least the current collector and the active material.

**7.** Electrode according to one of the preceding claims, wherein the anion-exchange membrane has a thickness from 1.0 $\mu$m to 60 $\mu$m, preferably from 5.0 $\mu$m to 50 $\mu$m, more preferably from 10.0 $\mu$m to 40 $\mu$m.

**8.** Electrode according to one of the preceding claims, further comprising a coating layer between the active material and the anion-exchange membrane, wherein the coating layer comprises a benzimidazole polymer.

**9.** Electrode according to one of the preceding claims, wherein the active material comprises $MnO_2$ and further comprises carbon, $Bi_2O_3$, and a binder material, wherein the binder material preferably is selected from the group consisting of a benzimidazole polymer, cellulose and fluoropolymer, such as polytetrafluoroethylene and fluorinated ethylene propylene.

**10.** Electrode according to one of the preceding claims, wherein the active material comprises 20-60 wt.-% $MnO_2$.

**11.** Electrode according to claim 10, wherein the active material further comprises at least one compound selected from the group consisting of carbon, $Bi_2O_3$, a binder material or mixtures thereof, wherein preferably the content of carbon is 30-45 wt.-%, the content of $Bi_2O_3$ is 5-15 wt.-%, and the content of the binder material is 5-15 wt.-%.

**12.** Electrode according to one of the preceding claims, wherein, when the active material comprises $MnO_2$, the $MnO_2$ is alpha-$MnO_2$ or electrolytic manganese dioxide (EMD).

**13.** Electrode according to one of the preceding claims, wherein the active material comprises $MnO_2$ and further comprises a nickel-based additive, preferably in an amount of 0.5 - 10 wt.-%, more preferably in an amount of 1.0 - 2.0 wt.-% with respect to the total weight of the active material.

**14.** Electrode according to one of the preceding claims, wherein the current collector is a mesh, a foil or a foam.

**15.** Rechargeable alkaline battery comprising the electrode according to one of the preceding claims as a positive electrode, when the active material comprises $MnO_2$, or as a negative electrode, when the active material comprises Zn.

Figure 1

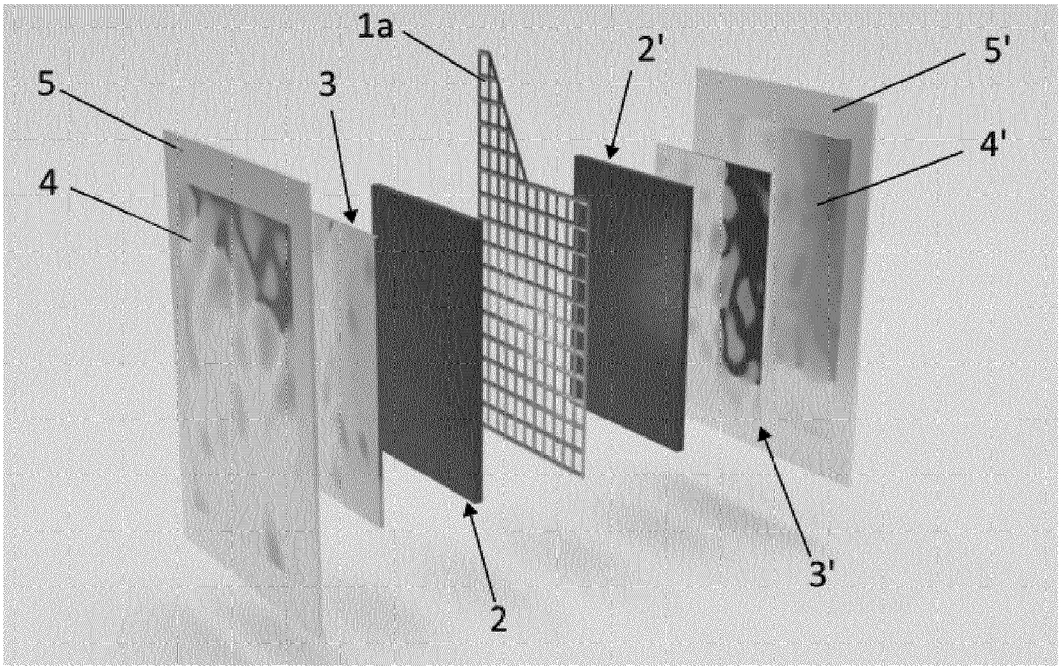


Figure 2

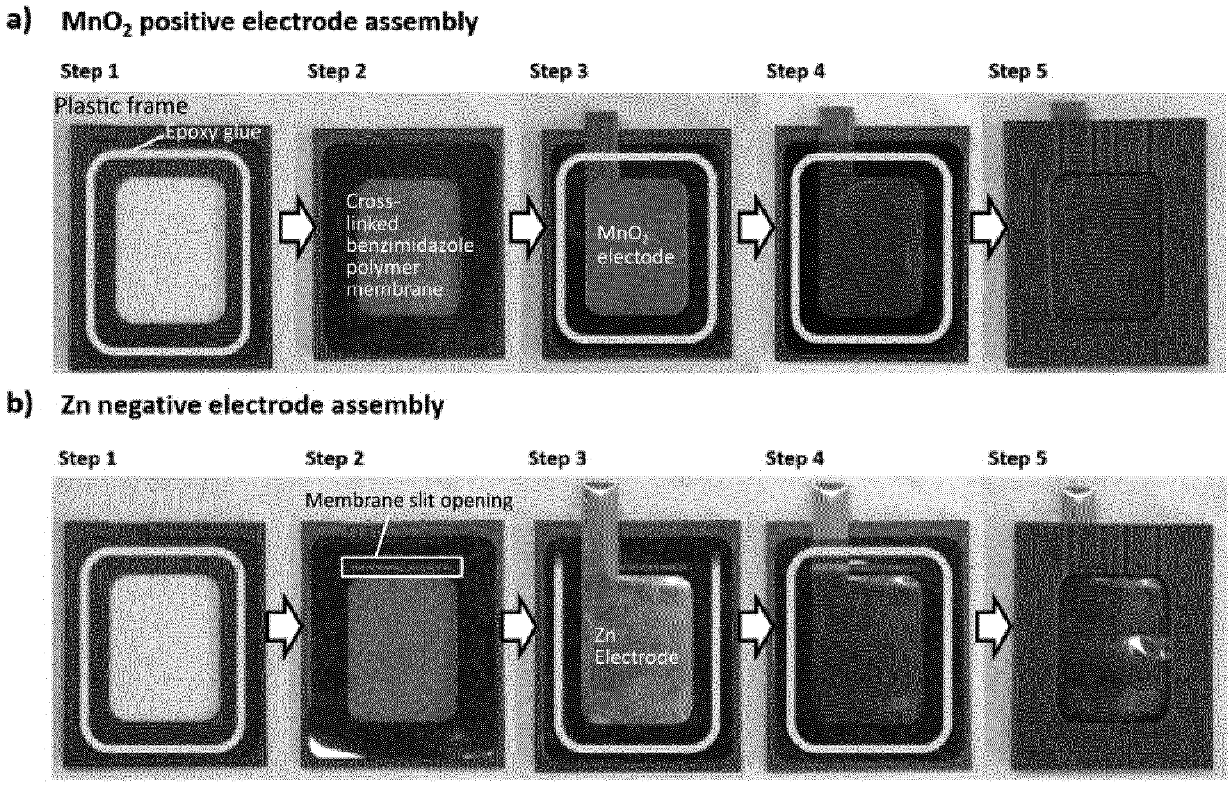

**Figure 3**

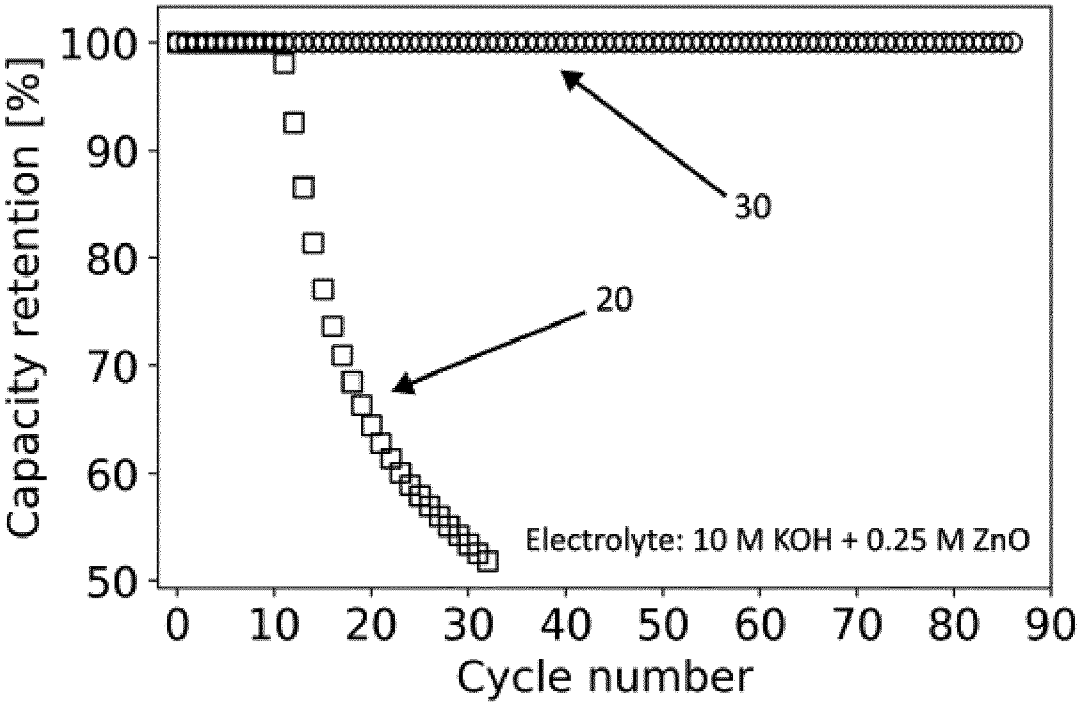


**Figure 4**

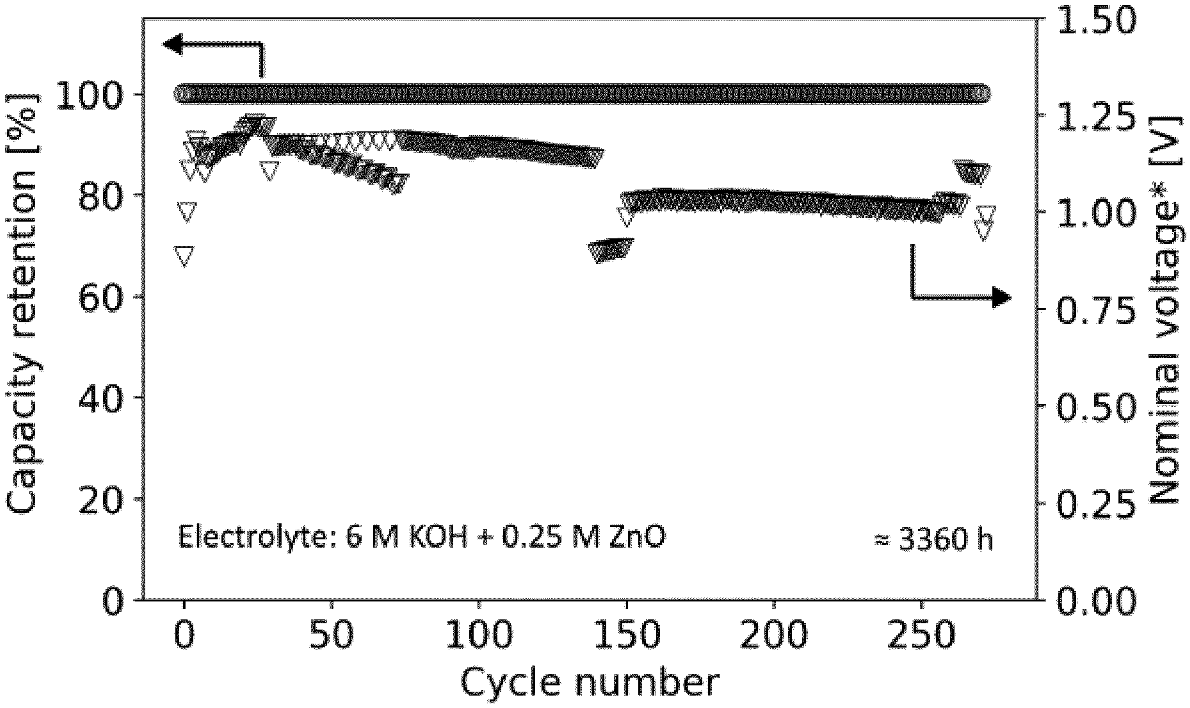

Figure 5

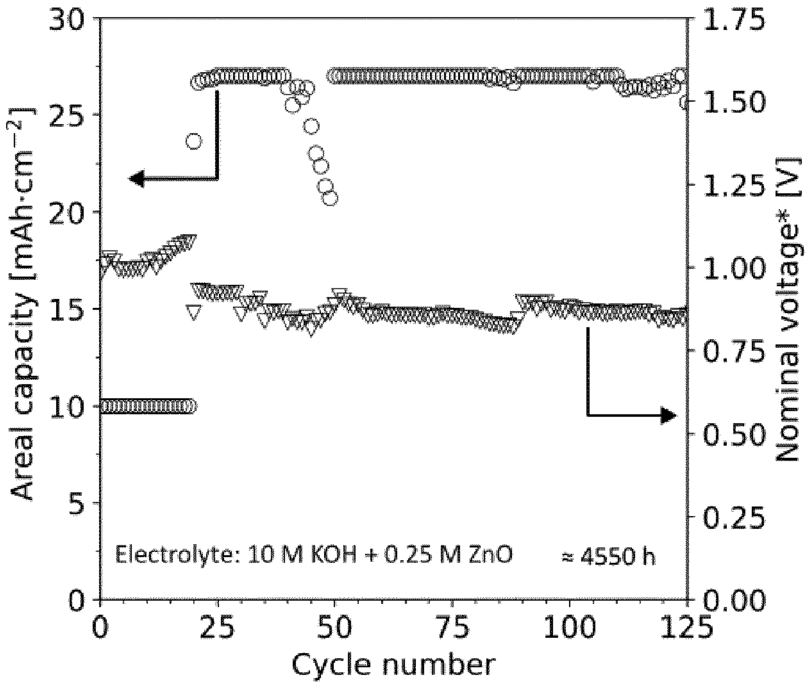


Figure 6

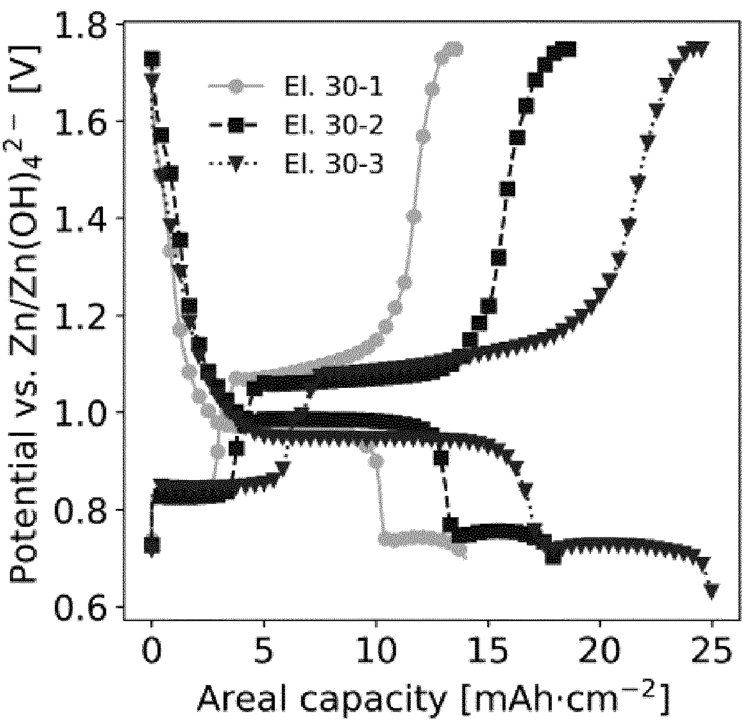

Figure 7

(a)

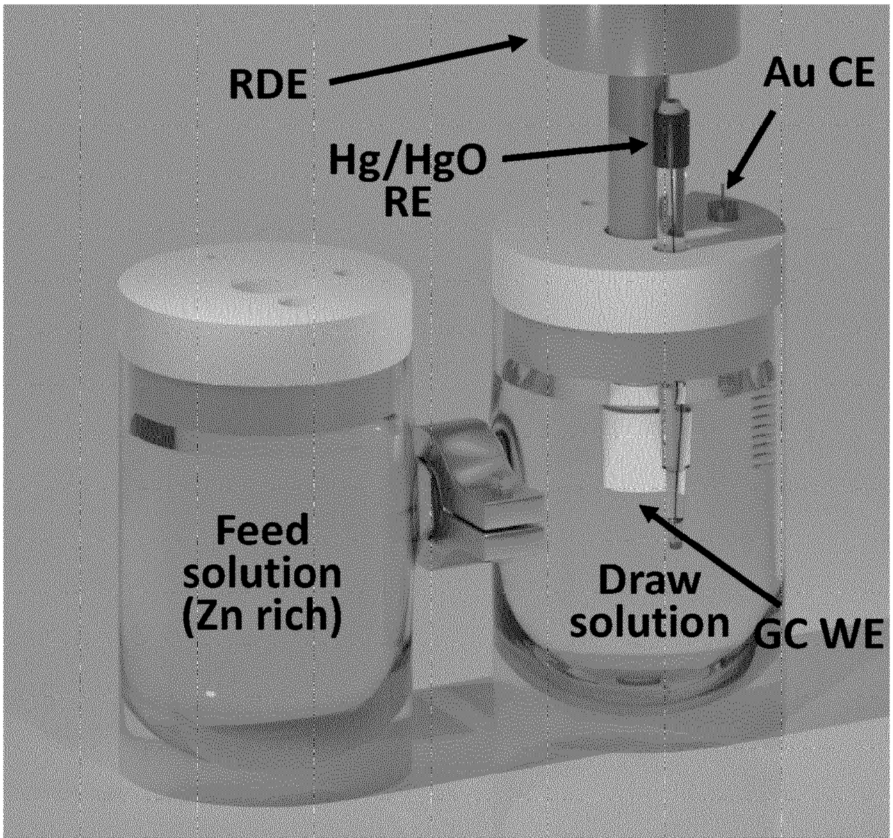
RDE
Au CE
Hg/HgO RE
Feed solution (Zn rich)
Draw solution
GC WE

(b)

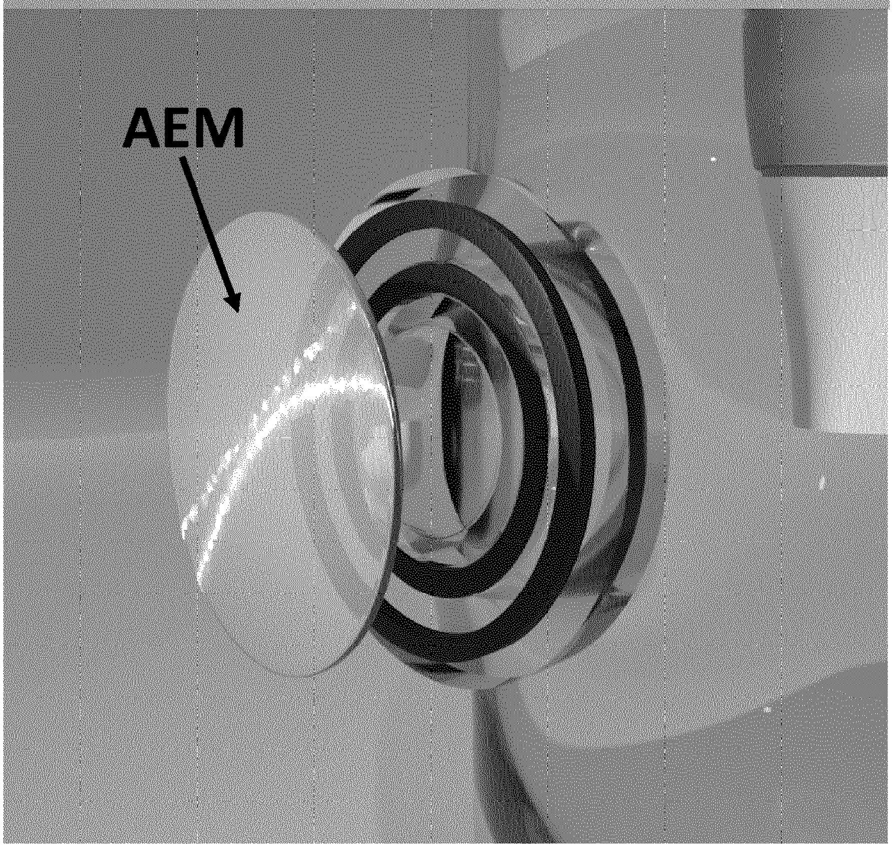
AEM

Figure 8

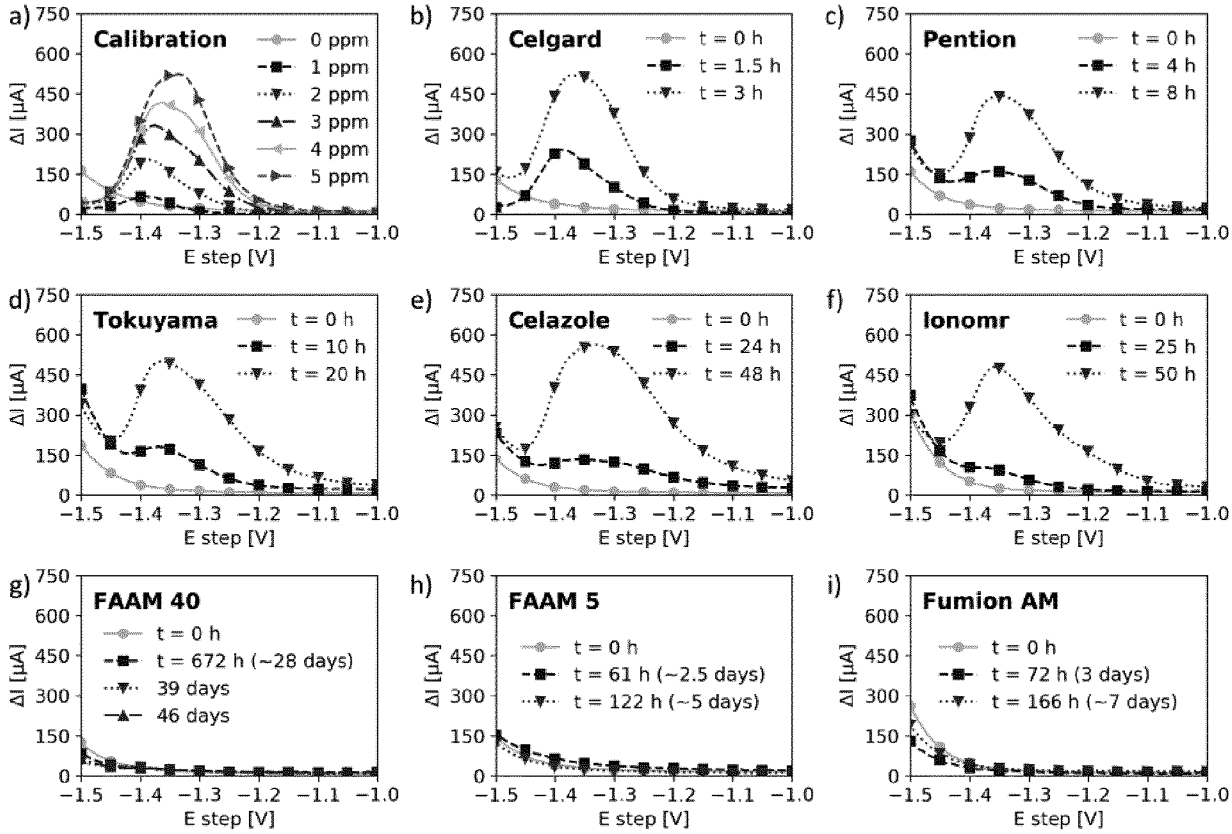


Figure 9

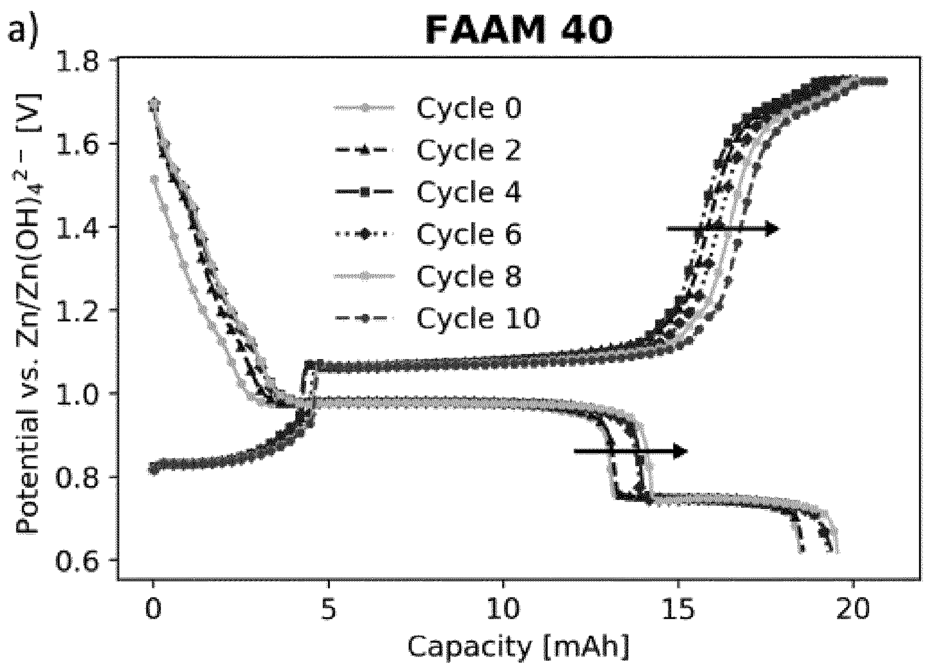

b)

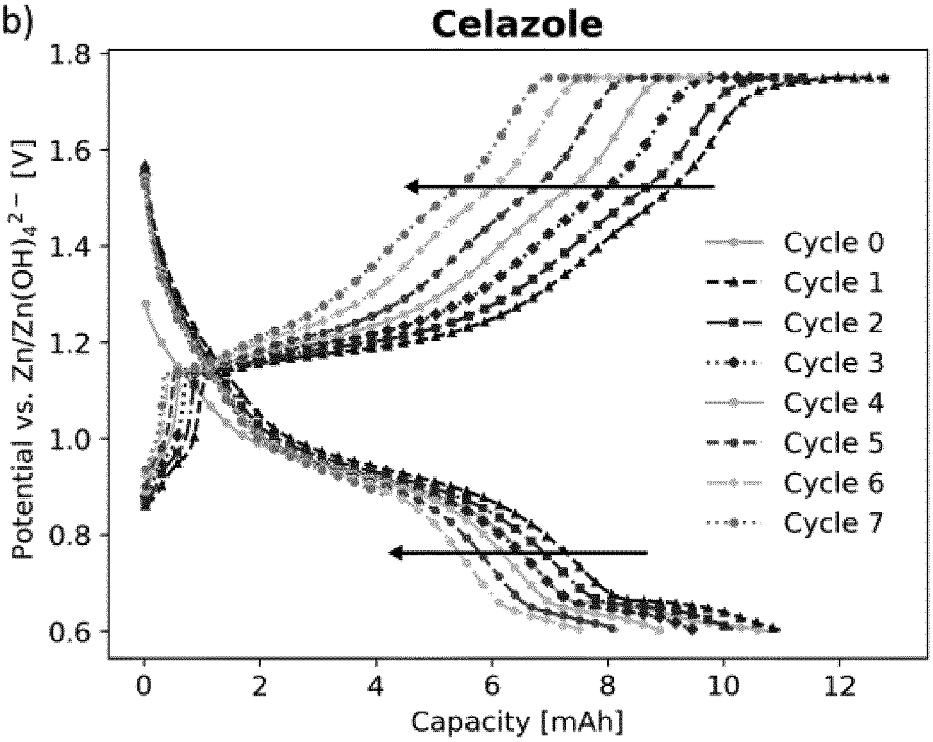
Celazole
Potential vs. Zn/Zn(OH)4 2− [V]
Capacity [mAh]
Cycle 0
Cycle 1
Cycle 2
Cycle 3
Cycle 4
Cycle 5
Cycle 6
Cycle 7
1.8
1.6
1.4
1.2
1.0
0.8
0.6
0
2
4
6
8
10
12

c)

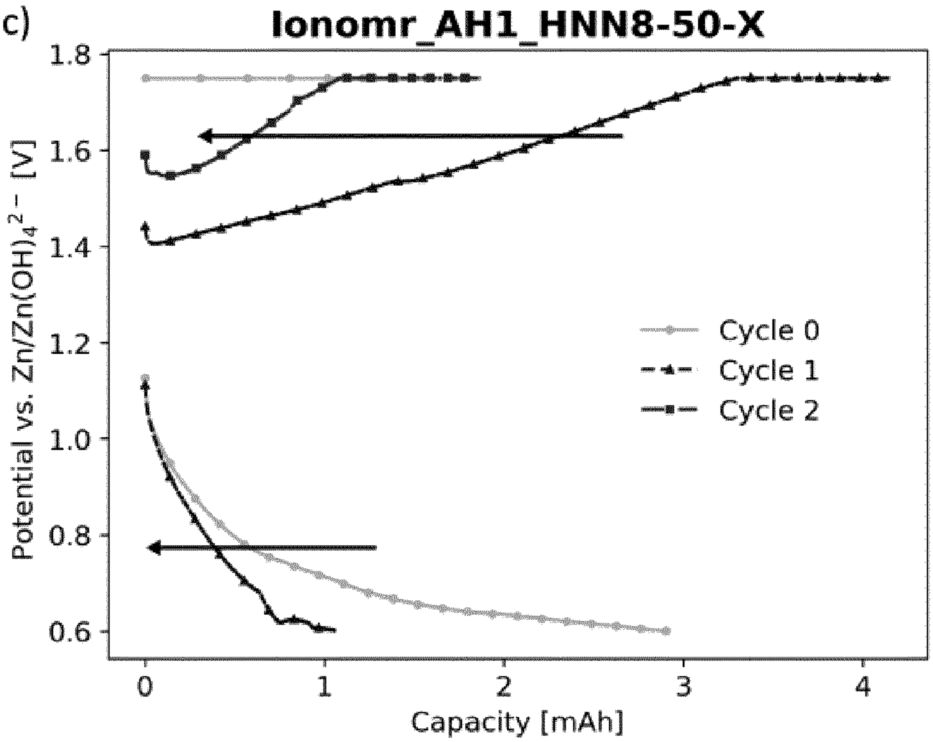
Ionomr_AH1_HNN8-50-X
Potential vs. Zn/Zn(OH)4 2− [V]
Capacity [mAh]
Cycle 0
Cycle 1
Cycle 2
1.8
1.6
1.4
1.2
1.0
0.8
0.6
0
1
2
3
4

d)

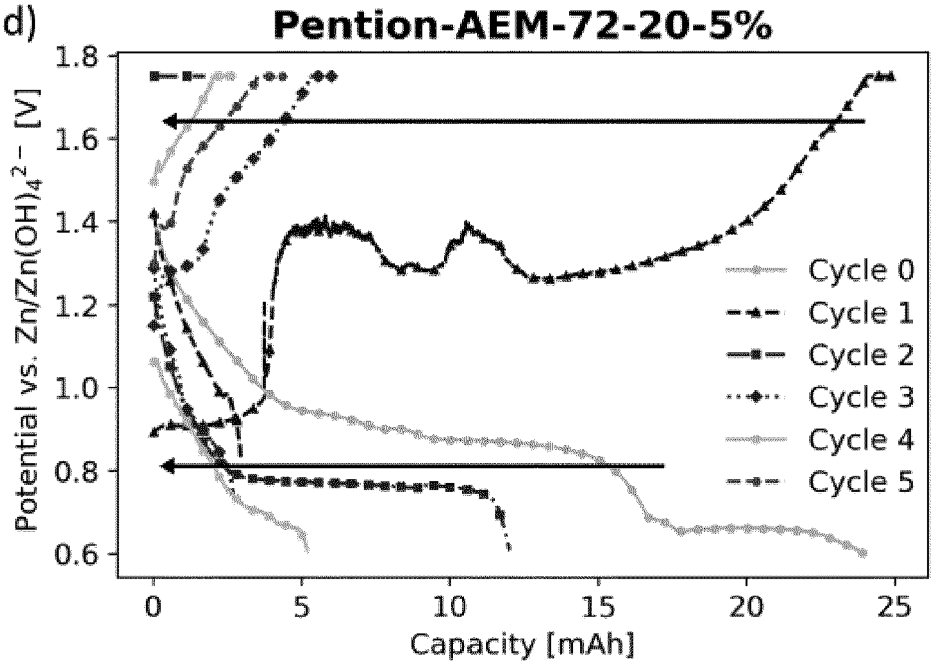
Pention-AEM-72-20-5%
Potential vs. Zn/Zn(OH)$_4$$^{2-}$ [V]
Capacity [mAh]
Cycle 0
Cycle 1
Cycle 2
Cycle 3
Cycle 4
Cycle 5

e)

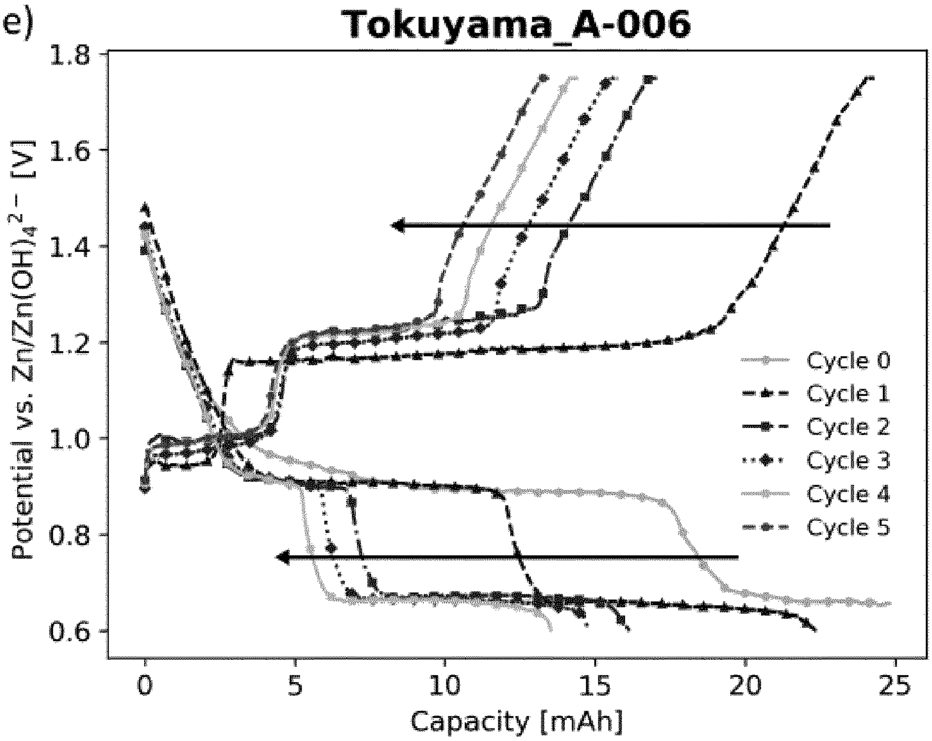
Tokuyama_A-006
Potential vs. Zn/Zn(OH)$_4$$^{2-}$ [V]
Capacity [mAh]
Cycle 0
Cycle 1
Cycle 2
Cycle 3
Cycle 4
Cycle 5

**Figure 10**

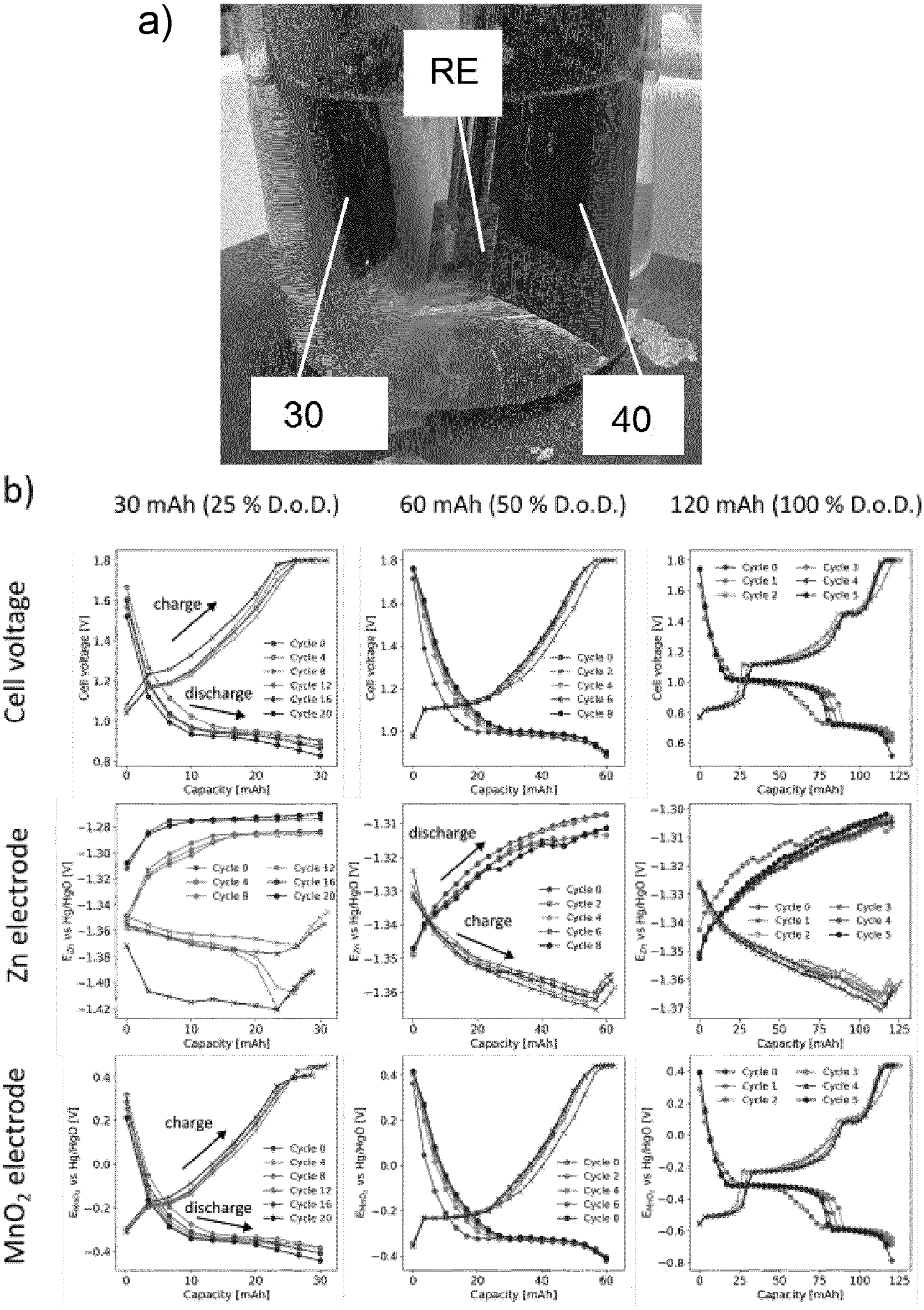
a)
RE
30
40
b)
30 mAh (25 % D.o.D.)
60 mAh (50 % D.o.D.)
120 mAh (100 % D.o.D.)
Cell voltage
Zn electrode
MnO2 electrode
charge
discharge
Cell voltage [V]
Capacity [mAh]
Cycle 0
Cycle 4
Cycle 8
Cycle 12
Cycle 16
Cycle 20
Cycle 2
Cycle 6
Cycle 1
Cycle 3
Cycle 5
E_Zn vs Hg/HgO [V]
E_MnO2 vs Hg/HgO [V]

**Figure 11**

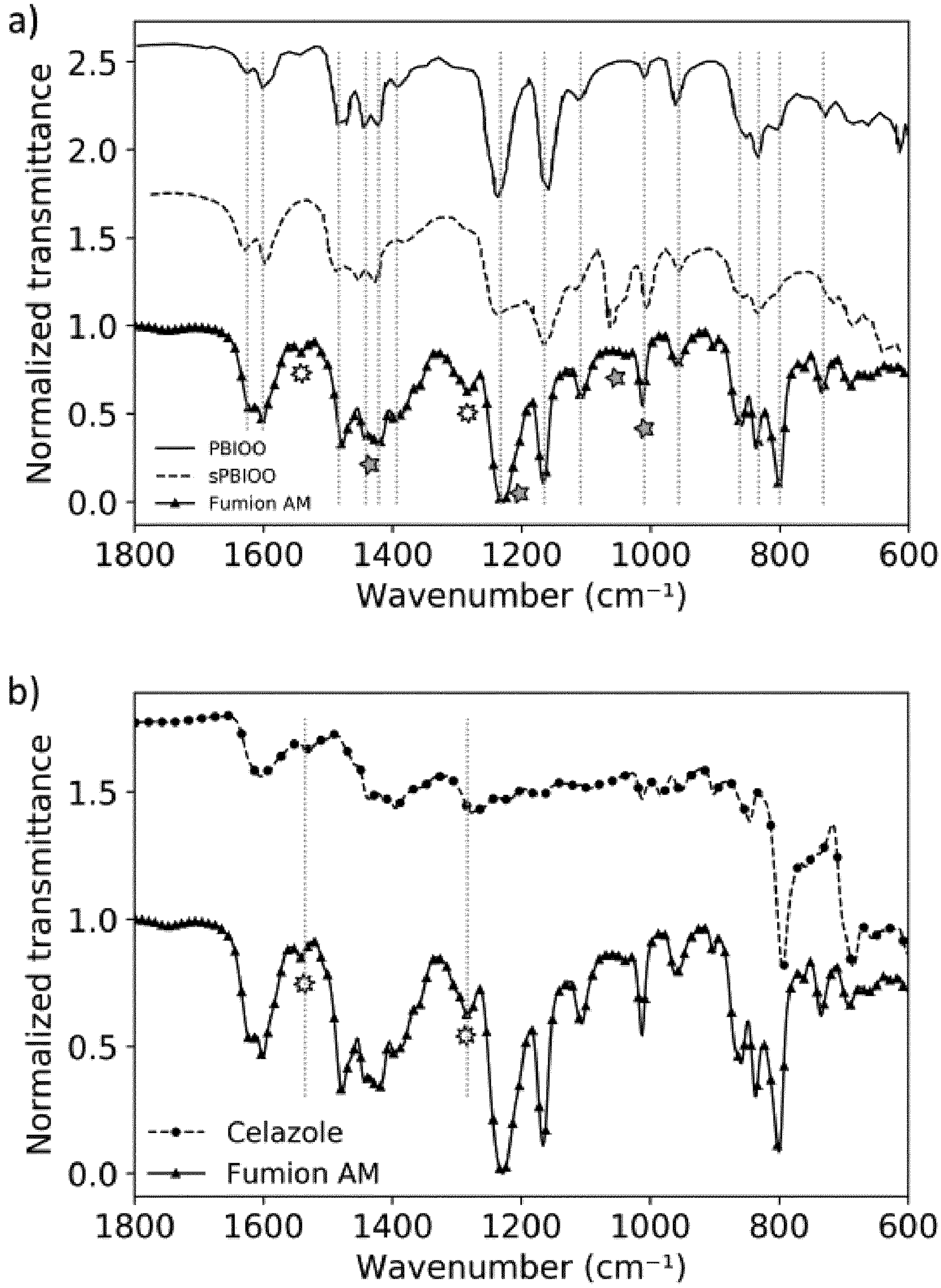

a)
Normalized transmittance
Wavenumber (cm⁻¹)
PBIOO
sPBIOO
Fumion AM
b)
Normalized transmittance
Wavenumber (cm⁻¹)
Celazole
Fumion AM

c)

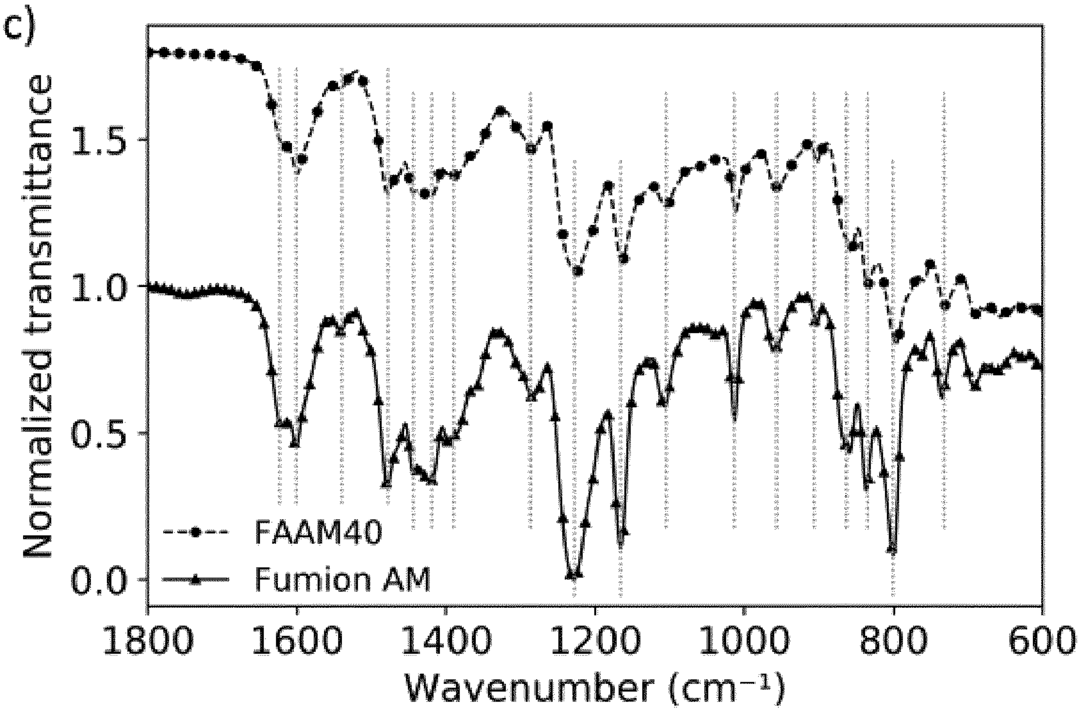
Normalized transmittance
0.0
0.5
1.0
1.5
1800
1600
1400
1200
1000
800
600
Wavenumber (cm⁻¹)
FAAM40
Fumion AM

d)

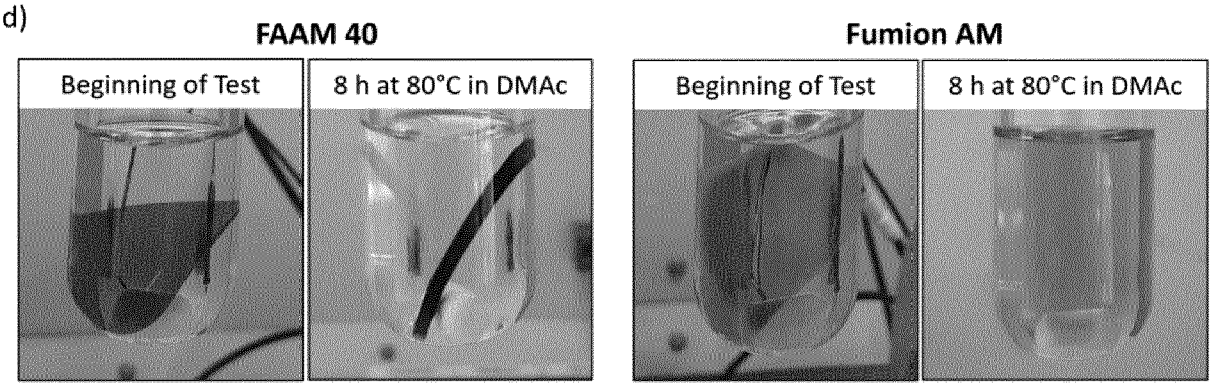
FAAM 40
Fumion AM
Beginning of Test
8 h at 80°C in DMAc
Beginning of Test
8 h at 80°C in DMAc

Europäisches Patentamt
European Patent Office
Office européen des brevets

# EUROPEAN SEARCH REPORT

Application Number
EP 23 17 1356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/083507 A1 (KAYE STEVEN [US] ET AL) 12 March 2020 (2020-03-12)<br>* paragraphs [0004], [0006], [0036], [0054], [0055], [0058], [0062], [0066], [0072], [0079], [0080], [0081] * | 1-15 | INV.<br>H01M4/24<br>H01M4/50<br>H01M4/62<br>H01M10/28<br>H01M50/414<br>H01M50/466<br>H01M50/46<br>H01M10/24 |
| Y | US 2018/316063 A1 (MASEL RICHARD I [US] ET AL) 1 November 2018 (2018-11-01)<br>* paragraphs [0064], [0122] - [0129]; example 3; table 2 * | 1-15 | |
| A | US 2021/028452 A1 (SU LIANG [US] ET AL) 28 January 2021 (2021-01-28)<br>* the whole document * | 1-15 | |
| | | | TECHNICAL FIELDS SEARCHED (IPC) |
| | | | H01M |

The present search report has been drawn up for all claims

| Place of search | Date of completion of the search | Examiner |
|---|---|---|
| Munich | 3 November 2023 | De Porcellinis, D |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 17 1356

This annex lists the patent family members relating to the patent documents cited in the above-mentioned European search report. The members are as contained in the European Patent Office EDP file on
The European Patent Office is in no way liable for these particulars which are merely given for the purpose of information.

03-11-2023

| Patent document cited in search report | Publication date | Patent family member(s) | Publication date |
|---|---|---|---|
| US 2020083507 A1 | 12-03-2020 | CN 112803120 A | 14-05-2021 |
| | | CN 112886135 A | 01-06-2021 |
| | | US 2020083505 A1 | 12-03-2020 |
| | | US 2020083507 A1 | 12-03-2020 |
| | | US 2020194833 A1 | 18-06-2020 |
| | | WO 2018213601 A2 | 22-11-2018 |
| | | WO 2021097164 A1 | 20-05-2021 |
| | | WO 2021097165 A1 | 20-05-2021 |
| US 2018316063 A1 | 01-11-2018 | CN 110582869 A | 17-12-2019 |
| | | JP 7237852 B2 | 13-03-2023 |
| | | JP 2020518964 A | 25-06-2020 |
| | | US 2018316063 A1 | 01-11-2018 |
| | | WO 2018204242 A1 | 08-11-2018 |
| US 2021028452 A1 | 28-01-2021 | AU 2020323485 A1 | 03-03-2022 |
| | | BR 112022001391 A2 | 03-05-2022 |
| | | CA 3148607 A1 | 04-02-2021 |
| | | CN 114930617 A | 19-08-2022 |
| | | EP 4005006 A1 | 01-06-2022 |
| | | JP 2022543752 A | 14-10-2022 |
| | | KR 20220110168 A | 05-08-2022 |
| | | US 2021028452 A1 | 28-01-2021 |
| | | WO 2021021681 A1 | 04-02-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **KORDESCH, K. ; GSELLMANN, J. ; PERI, M. ; TOMANTSCHGER, K. ; CHEMELLI, R.** *Electrochim. Acta,* 1981, vol. 26, 1495-1504
- **INGALE, N. D. ; GALLAWAY, J. W. ; NYCE, M. ; COUZIS, A. ; BANERJEE, S.** *J. Power Sources,* 2015, vol. 276, 7-18
- **WROBLOWA, H. S. ; GUPTA, N.** *J. Electroanal. Chem. Interfacial Electrochem.,* 1987, vol. 238, 1-2
- **YADAV, G. G. ; GALLAWAY, J. W. ; TURNEY, D. E. ; NYCE, M. ; HUANG, J. ; WEI, X. ; BANERJEE, S.** *Nat. Commun.,* 2017, 14424
- **YADAV, G. G. ; WEI, X. ; HUANG, J. ; GALLAWAY, J. W. ; TURNEY, D. E. ; NYCE, M. ; SECOR, J. ; BANERJEE, S.** *J. Mater. Chem.,* 2017, vol. A5, 15845-15854
- **DUAY, J. ; KELLY, M. ; LAMBERT, T. N.** *J. Power Sources,* 2018, vol. 395, 430-438
- **KOLESNICHENKO, I. V. ; ARNOT, D. J. ; LIM, M. B. ; YADAV, G. G. ; NYCE, M. ; HUANG, J. ; BANERJEE, S. ; LAMBERT, T. N.** *ACS Appl. Mater. Interfaces,* 2020, vol. 12, 50406-50417
- **HUANG, J. ; YADAV, G. G. ; TURNEY, D. E. ; CHO, J. ; NYCE, M. ; WYGANT, B. R. ; LAMBERT, T. N. ; BANERJEE, S.** *ACS Appl. Energy Mater.,* 2022, vol. 5, 9952-9961
- **CLEMENS, A. L. ; JAYATHILAKE, B. S. ; KARNES, J. J. ; SCHWARTZ, J. J. ; BAKER, S. E. ; DUOSS, E. B. ; OAKDALE, J. S.** Tuning Alkaline Anion Exchange Membranes through Crosslinking: A Review of Synthetic Strategies and Property Relationships. *Polymers,* 2023, vol. 15 (6), 1534
- *CHEMICAL ABSTRACTS,* 2676-59-7
- **PERON, J. ; RUIZ, E. ; JONES, D. J. ; ROZIÈRE, J.** *J. Membr. Sci.,* 2008, vol. 314, 1-2
- **HUANG, H. ; SITHAMBARAM, S. ; CHEN, C. H. ; KING'ONDU KITHONGO, C. ; XU, L. ; IYER, A. ; GARCES, H. F. ; SUIB, S. L.** *Chemistry of materials,* 2010, vol. 22 (12), 3664-3669
- *J. Power Sources,* 2021, vol. 482, 22890
- **PERON, J. ; RUIZ, E. ; JONES, D. J. ; ROZIÈRE, J.** *J. Membr. Sci.,* 2008, vol. 314, 247-256
- **ASENSIO, J. A. ; BORRÓS, S. ; GÓMEZ-ROMERO, P.** *J. Polym. Sci. A: Polym. Chem.,* 2002, vol. 40, 3703-3710